# EUROPEAN PATENT SPECIFICATION

(11) **EP 4 428 758 B1**
(45) Date of publication and mention of the grant of the patent: **03.09.2025**
(21) Application number: 24162272.9
(22) Date of filing: 08.03.2024
(51) Int. Cl.: G06N 3/063, G06F 9/50, G06F 9/54, G06N 3/045, G06F 9/30

(54) **METHOD AND APPARATUS FOR PROCESSING NEURAL NETWORK FEATURE MAP BY USING A PLURALITY OF ACCELERATORS**
VERFAHREN UND VORRICHTUNG ZUR VERARBEITUNG EINER FUNKTIONSKARTE EINES NEURONALEN NETZWERKS UNTER VERWENDUNG MEHRERER BESCHLEUNIGER
PROCÉDÉ ET APPAREIL DE TRAITEMENT DE CARTE DE CARACTÉRISTIQUES DE RÉSEAU NEURONAL À L'AIDE D'UNE PLURALITÉ D'ACCÉLÉRATEURS

(30) Priority: 09.03.2023 CN 202310226423
(43) Date of publication of application: 11.09.2024
(73) Proprietor: Beijing Horizon Information Technology Co., Ltd., Beijing 100094 (CN)
(72) Inventor: HE, Yibo, Beijing, 100094 (CN); XIAO, Lei, Beijing, 100094 (CN); TAN, Honghe, Beijing, 100094 (CN)
(74) Representative: Dehns Germany Partnerschaft mbB

(56) References cited:
- US-A1- 2019 340 314
- US-B1- 11 106 972

## Description

### FIELD OF THE INVENTION

This disclosure relates to technologies of artificial intelligence, and in particular, to a method and an apparatus for processing a neural network feature map by using a plurality of accelerators.

### BACKGROUND OF THE INVENTION

With increasing demand on a size and computational power of a feature map in a convolutional neural network, a plurality of accelerators are usually required to collaborate on processing a same feature map. In related technologies, the feature map is usually split in at least one direction of width and height; and the sub-feature maps obtained through splitting are collaboratively processed by using a plurality of accelerators; such as convolution operation, operation results of a plurality of convolution operation accelerators are integrated to obtain a convolutional operation result corresponding to the feature map. However, during the convolution operation, the sub-feature maps obtained through splitting usually have overlap areas at boundaries that need to be reused by the plurality of accelerators. Regarding feature data of the overlap area, there are usually two manners used in the related technologies. A first manner is to store the feature data of the overlap area in a memory of each accelerator, so that each accelerator may independently complete a respective operation task. A second manner is that the memory in each accelerator only stores non-overlapping feature data, and the feature data of the overlap area is transmitted between memories of various accelerators through network on chip (NOC) communication between the accelerators. The first manner results in relatively high demand for storage space to the memory in the accelerator, while the second manner results in waste of NOC bandwidth due to data transmission between the accelerators. US 2019/340314 A1 discloses a configurable accelerator framework including a stream switch and a plurality of convolution accelerators (CA), wherein the stream switch includes a plurality of input ports and output ports that can be configured at runtime to transmit data unidirectionally over a stream link; each convolution accelerator CA is capable of receiving input data through at least two stream switch output ports and passing output data through the stream switch input ports; and the convolution accelerator CA includes a kernel buffer, a feature line buffer, and a multiplication accumulation unit module for performing convolution operations and data accumulation. The second convolution accelerator may receive intermediate data output from the first convolution accelerator as input for further processing, and its role is to perform intermediate result merging and optimization of cross-layer calculations; and the third convolution accelerator works with other accelerators in higher-level calculations, and is connected with other modules through the stream switch input and output ports to handle complex feature mapping and accumulation operations.

### SUMMARY OF THE INVENTION

To resolve technical problems such as relatively high demand for storage space in an accelerator and NOC bandwidth waste due to data transmission between accelerators, the present invention according to the independent claims is proposed. The present invention provide a method and an apparatus according to the independent claims for processing a neural network feature map by using a plurality of accelerators.

According to an aspect of the present invention, a method for processing a neural network feature map by using a plurality of accelerators is provided, including: reading first feature data related to the neural network feature map from a first shift register array in a first accelerator among a plurality of neural network accelerators, and reading first weight data corresponding to the first feature data from a first buffer in the first accelerator; performing a preset operation on the first feature data and the first weight data by using the first accelerator, to obtain a first operation result; shifting, according to a preset shift rule, first overlapping feature data that is in the first feature data and that is required by a second accelerator in the plurality of neural network accelerators from the first shift register array to a second shift register array of the second accelerator; reading second feature data including the first overlapping feature data from the second shift register array in the second accelerator, and reading second weight data corresponding to the second feature data from a second buffer in the second accelerator; and performing a preset operation on the second feature data and the second weight data by using the second accelerator, to obtain a second operation result.

According to another aspect of the present invention, an apparatus for processing a neural network feature map by using a plurality of accelerators is provided, including a plurality of neural network accelerators, where each neural network accelerator includes a controller, a shift register array, a buffer, and an operation array for a preset operation; for a first accelerator in the plurality of neural network accelerators, a first controller in the first accelerator reads first feature data related to the neural network feature map from a first shift register array in the first accelerator, and reads first weight data corresponding to the first feature data from a first buffer in the first accelerator; the first controller controls a first operation array in the first accelerator to perform a preset operation on the first feature data and the first weight data, to obtain a first operation result; the first controller controls, according to a preset shift rule, the first shift register array to shift first overlapping feature data that is in the first feature data and that is required by a second accelerator in the plurality of neural network accelerators to a second shift register array of the second accelerator; a second controller in the second accelerator reads second feature data including the first overlapping feature data from the second shift register array, and reads second weight data corresponding to the second feature data from a second buffer in the second accelerator; and the second controller controls a second operation array in the second accelerator to perform a preset operation on the second feature data and the second weight data, to obtain a second operation result.

According to the method and the apparatus for processing a neural network feature map by using a plurality of accelerators that are provided in the foregoing embodiments of this invention, data of an overlap area is shifted by using shift register arrays of a plurality of accelerators, so that the data of the overlap area in an accelerator is shifted to an adjacent accelerator. Thus, each accelerator may store non-overlapping data, respectively. In this way, data is reused while demand for storage space in the accelerator is reduced, thereby greatly reducing bandwidth waste of a NOC, reducing power consumption, and improving performance of the accelerator.

The technical solutions of this invention are further described below in detail with reference to the accompanying drawings and the embodiments.

### BRIEF DESCRIPTION OF THE DRAWINGS

FIG. 1 shows an exemplary application scenario of a method for processing a neural network feature map by using a plurality of accelerators according to this invention;
FIG. 2 is a schematic flowchart of a method for processing a neural network feature map by using a plurality of accelerators according to an exemplary embodiment of this invention;
FIG. 3 is a schematic flowchart of a method for processing a neural network feature map by using a plurality of accelerators according to another exemplary embodiment of this invention;
FIG. 4 is a schematic diagram of a connection between shift register arrays according to an exemplary embodiment of this invention;
FIG. 5 is a schematic flowchart of a method for processing a neural network feature map by using a plurality of accelerators according to still another exemplary embodiment of this invention;
FIG. 6 is a schematic diagram of a data shift process in an operation cycle of a shift register array according to an exemplary embodiment of this invention;
FIG. 7 is a schematic diagram of a connection between shift register arrays according to another exemplary embodiment of this invention;
FIG. 8 is a schematic diagram of a structure of an apparatus for processing a neural network feature map by using a plurality of accelerators according to an exemplary embodiment of this invention;
FIG. 9 is a schematic diagram of a structure of an apparatus for processing a neural network feature map by using a plurality of accelerators according to another exemplary embodiment of this invention;
FIG. 10 is a schematic diagram of connections between four accelerators and a target shift register array according to an exemplary embodiment of this invention;
FIG. 11 is a schematic diagram of a specific structure of an accelerator according to an exemplary embodiment of this invention; and
FIG. 12 is a schematic diagram of a structure of an electronic device according to an application embodiment of this invention.

### DETAILED DESCRIPTION OF THE EMBODIMENTS

Exemplary embodiments of this invention are described below in detail with reference to the accompanying drawings. Obviously, the described embodiments are merely a part, rather than all of embodiments of this invention. It should be understood that this invention is not limited by the exemplary embodiments described herein.

It should be noted that unless otherwise specified, the scope of this invention is not limited by relative arrangement, numeric expressions, and numerical values of components and steps described in these embodiments.

A person skilled in the art may understand that terms such as "first" and "second" in the embodiments of this disclosure are merely configured to distinguish between different steps, devices, or modules, and indicate neither any particular technical meaning, nor necessarily logical ordering among them.

It should be further understood that, in the embodiments of this disclosure, the term "multiple"/"a plurality of" may refer to two or more; and the term "at least one" may refer to one, two, or more.

It should be further understood that, any component, data, or structure involved in the embodiments of this disclosure may be generally construed to one or more, unless clearly stated or the context indicates otherwise.

In addition, the term "and/or" in this disclosure refers to only an association relationship that describes associated objects, indicating presence of three relationships. For example, A and/or B may indicate presence of three cases: A alone, both A and B, and B alone. In addition, the character "/" in this disclosure generally indicates an "or" relationship of associated objects.

It should be further understood that, the descriptions of the various embodiments of this disclosure focus on differences among the various embodiments. The same or similar parts among the embodiments may refer to one another. For concision, description is not repeated.

Descriptions of at least one exemplary embodiment below are actually illustrative only, and never serve as any limitation to this invention along with application or use thereof.

Technologies, methods, and devices known by a person of ordinary skills in the art may not be discussed in detail herein. However, where appropriate, the technologies, the methods, and the devices shall be regarded as a part of the specification.

It should be noted that, similar signs and letters in the following accompanying drawings indicate similar items. Therefore, once a certain item is defined in one of the accompanying drawings, there is no need to further discuss the item in the subsequent accompanying drawings.

The embodiments of this invention may be applicable to a terminal device, a computer system, a server, and other electronic devices, which may be operated together with numerous other general-purpose or special-purpose computing system environments or configurations. Well-known examples of a terminal device, a computing system, and environment and/or configuration applicable to be used with these electronic devices include but are not limited to: a personal computer system, a server computer system, a thin client, a thick client, a handheld or laptop device, a microprocessor-based system, a set-top box, programmable consumer electronics, a network personal computer, a small computer system, a mainframe computer system, and a distributed cloud computing technology environment including any of the foregoing systems.

The electronic device such as a terminal device, a computer system, or a server may be described in general context of a computer system-executable instruction (such as a program module) executed by the computer system. Generally, the program module may include a routine, a program, a target program, a component, logic, a data structure, and the like that execute particular tasks or implement particular abstract data types. The computer system/server may be implemented in a distributed cloud computing environment. In the distributed cloud computing environment, a task is performed by a remote processing device linked through a communications network. In the distributed cloud computing environment, the program module may be located on a storage medium of a local or remote computing system including a storage device.

### Overview of this invention

In a process of implementing this invention, the inventor finds that with increasing demand on a size and computational power of a feature map in a convolutional neural network, a plurality of accelerators are usually required to collaborate on processing a same feature map. In related technologies, the feature map is usually split in at least one direction of width and height; collaborative processing, such as a convolution operation, is performed on sub-feature maps obtained through splitting by using a plurality of accelerators; and operation results of a plurality of convolution operation accelerators are integrated to obtain a convolutional operation result corresponding to the feature map. However, during the convolution operation, the sub-feature maps obtained through splitting usually have overlap areas at boundaries that need to be reused by the plurality of accelerators. For example, when a convolution operation is performed on a boundary pixel of a sub-feature map, if the size of a convolution kernel is not 1*1, for example, if the size of the convolution kernel is 3*3, a feature value of another sub-feature map adjacent to a boundary of the sub-feature map needs to be used. Similarly, a feature value of an adjacent sub-feature map also needs to be used for convolution of a boundary pixel of the other sub-feature map. These areas that may be reused by adjacent sub-feature maps are referred to as overlap areas. Regarding feature data of the overlap area, there are usually two manners used in the related technologies. A first manner is to store the feature data of the overlap area in a memory of each accelerator, so that each accelerator may independently complete a respective operation task. A second manner is that the memory in each accelerator core only stores non-overlapping feature data, and the feature data of the overlap area is transmitted between memories of various accelerators through NOC (network on chip) communication between the accelerators. The first manner results in relatively high demand for storage space to the memory in the accelerator, while the second manner results in waste of NOC bandwidth due to data transmission between the accelerators.

### Exemplary overview

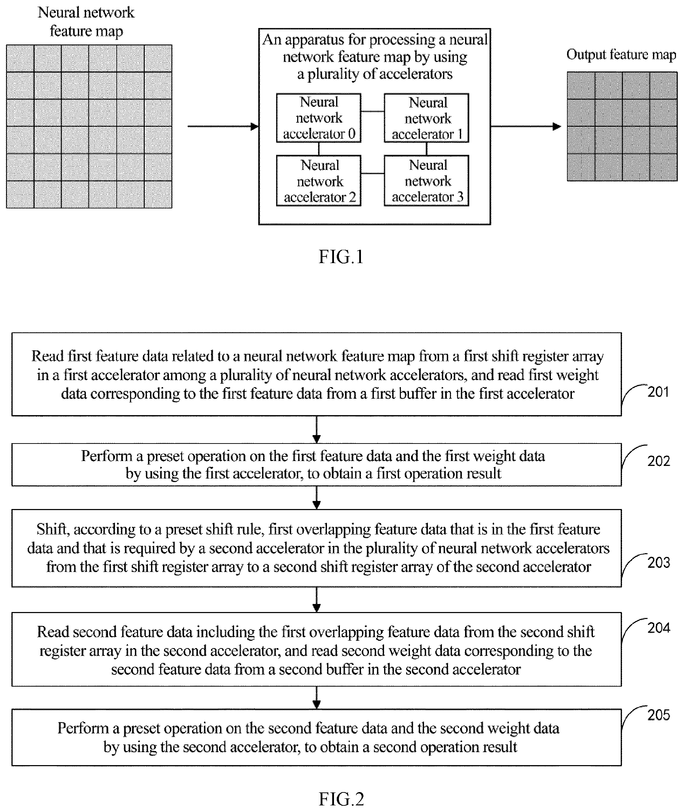

FIG. 1 shows an exemplary application scenario of a method for processing a neural network feature map by using a plurality of accelerators according to this invention. When a convolution operation needs to be performed on the neural network feature map, by using the method for processing a neural network feature map by using a plurality of accelerators (which is implemented by using an apparatus for processing a neural network feature map by using a plurality of accelerators) in this invention, a shift register array may be configured in a neural network accelerator (which may be referred to as an accelerator for short). Shift register arrays in various neural network accelerators are connected to each other, so as to transmit feature data of an overlap area between the neural network accelerators through a data shift of the register array. In FIG. 1, four accelerators are used as an example. In practical applications, a quantity of the accelerators may be specifically set according to actual requirements. Specifically, first feature data related to the neural network feature map may be read from a first shift register array in a first accelerator among a plurality of neural network accelerators, and first weight data corresponding to the first feature data may be read from a first buffer in the first accelerator. A preset operation is performed on the first feature data and the first weight data by using the first accelerator, to obtain a first operation result. First overlapping feature data that is in the first feature data and that is required by a second accelerator in the plurality of neural network accelerators is shifted from the first shift register array to a second shift register array of the second accelerator based on a preset shift rule. Second feature data including the first overlapping feature data is read from the second shift register array in the second accelerator, and second weight data corresponding to the second feature data is read from a second buffer in the second accelerator. A preset operation is performed on the second feature data and the second weight data by using the second accelerator, to obtain a second operation result. The plurality of neural network accelerators synergistically work to complete a convolution operation on the neural network feature map through a plurality of shifts, to obtain an output feature map corresponding to the neural network feature map.

The first accelerator is any accelerator in the plurality of neural network accelerators that stores the feature data of the overlap area that is required by another accelerator, such as a neural network accelerator 1 (which needs to provide the feature data of the overlap area to a neural network accelerator 0) or a neural network accelerator 2 (which needs to provide the feature data of the overlap area to the neural network accelerator 1). The second accelerator is an accelerator having the feature data of the overlap area with the first accelerator. For example, when the first accelerator is the neural network accelerator 1, the second accelerator may be the neural network accelerator 0. The preset operation may be a multiply-accumulate (MAC) operation. Each accelerator may include a plurality of multiply-accumulate operation units, which form a MAC array. Each time, each multiply-accumulate operation unit may complete an operation of multiplying a feature value by a weight corresponding to the feature value, and adding a product and a previous accumulation result. On this basis, through a plurality of shifts of the register array, a plurality of feature values required for convolution of a pixel are provided to each multiply-accumulate operation unit, to enable the multiply-accumulate operation unit to complete a convolution operation for the pixel. For example, 9 feature values are required for 3 *3 convolution. The data of the overlap area is shifted by using shift register arrays of a plurality of accelerators, so that the data of the overlap area in an accelerator may be shifted to an adjacent accelerator. Thus, each accelerator may store non-overlapping data, respectively. In this way, data is reused while demand for storage space in the accelerator is reduced, thereby greatly reducing bandwidth waste of a NOC due to NOC data transmission between the accelerators, reducing power consumption, and effectively improving performance of the accelerator.

### Exemplary method

FIG. 2 is a schematic flowchart of a method for processing a neural network feature map by using a plurality of accelerators according to an exemplary embodiment of this invention. This embodiment may be applicable to an electronic device, such as an on-board computing platform. As shown in FIG. 2, the method includes the following steps.

Step 201, read first feature data related to the neural network feature map from a first shift register array in a first accelerator among a plurality of neural network accelerators, and read first weight data corresponding to the first feature data from a first buffer in the first accelerator.

The first accelerator may be any accelerator in the plurality of neural network accelerators. A shift register array included in the first accelerator is referred to as the first shift register array. The shift register array is configured to provide feature data for the operation of the accelerator. Therefore, a size of the shift register array may be determined based on a situation of an operation unit in the accelerator. For example, if a MAC array in the accelerator includes a 2*2 operation unit array, the shift register array may be a 2*2 register array. The shift register array may perform shifting of two degrees of freedom. The first feature data is a part of feature data related to the neural network feature map that is pre-configured in the first shift register array, or may be feature data related to the neural network feature map after a data shift. This is not specifically limited. Weight data, such as 9 weight values of each 3*3 convolution kernel, that is used for a preset operation on the neural network feature map is pre-configured in the first buffer. During each operation of the accelerator, the first weight data corresponding to the first feature data of a current operation may be read from the first buffer. For example, the first feature data includes four feature values in a manner of 2*2, which are transmitted to four operation units of the accelerator, respectively. Moreover, a weight value corresponding to the current operation is provided to each operation unit, so as to perform a multiplication operation with the feature value; and a product result is added to a previous accumulation result.

Step 202, perform a preset operation on the first feature data and the first weight data by using the first accelerator, to obtain a first operation result.

The preset operation may be a multiple-accumulate operation, or may be another possible operation, such as an operation of calculating an average value or a maximum value for an overlap pooling layer. This may be specifically set according to actual requirements. The first accelerator may include at least one operation unit for preset operations, such as a 2*2 MAC array, to perform an operation on the first feature data and the first weight data to obtain the first operation result. The first operation result is a multiply-accumulate result obtained from the current operation, and may include multiply-accumulate values with a same quantity as the operation units.

In an optional embodiment, the first operation result may be stored by using a register, so as to be used for a next operation.

Step 203, shift, according to a preset shift rule, first overlapping feature data that is in the first feature data and that is required by a second accelerator in the plurality of neural network accelerators from the first shift register array to a second shift register array of the second accelerator.

The preset shift rule may be determined based on specific weight data of the preset operation. For example, if a size of the convolution kernel is 3*3, it is needed to provide feature data to the accelerator once and then perform 8 shifts according to a certain rule, to provide a total of 9 feature values respectively corresponding to 9 weights of the convolution kernel to each operation unit of the accelerator, so that each operation unit of the accelerator completes a convolution operation for a pixel. The second accelerator is an accelerator that needs to obtain feature data of an overlap area from the first accelerator during the operation process. The first overlapping feature data may be a part of the feature data of the overlap area.

Step 204, read second feature data including the first overlapping feature data from the second shift register array in the second accelerator, and read second weight data corresponding to the second feature data from a second buffer in the second accelerator.

Step 205, perform a preset operation on the second feature data and the second weight data by using the second accelerator, to obtain a second operation result.

Specific operation principles for steps 204 and 205 are similar to those for steps 201 and 202, and details are not described herein again.

In an optional embodiment, steps 201 to 203 are performed simultaneously for the plurality of neural network accelerators. Shift register arrays in various neural network accelerators are connected according to a certain arrangement rule to form an entire shift register array, which shifts data synchronously. Preset operations for more pixels may be completed synchronously by using the plurality of neural network accelerators.

According to the method for processing a neural network feature map by using a plurality of accelerators provided in this embodiment, data of an overlap area is shifted by using the shift register arrays of the plurality of accelerators, so that the data of the overlap area in an accelerator may be shifted to an adjacent accelerator. Thus, each accelerator may store non-overlapping data, respectively. In this way, data is reused while demand for storage space in the accelerator is reduced, thereby greatly reducing bandwidth waste of a NOC between the accelerators, reducing power consumption, and effectively improving performance of the accelerator.

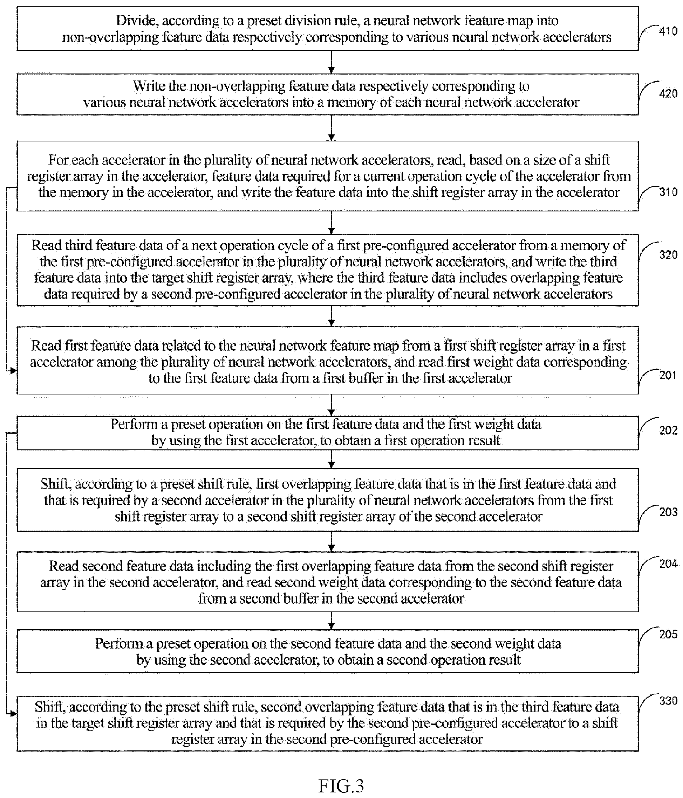

FIG. 3 is a schematic flowchart of a method for processing a neural network feature map by using a plurality of accelerators according to another exemplary embodiment of this invention.

In an optional embodiment, the shift register array in each neural network accelerator is connected to a target shift register array outside the plurality of neural network accelerators according to a preset arrangement rule.

Before step 201 of reading the first feature data related to the neural network feature map from the first shift register array in the first accelerator, and reading the first weight data corresponding to the first feature data from the first buffer in the first accelerator, the method in this invention further includes the following steps.

Step 310, for each accelerator in the plurality of neural network accelerators, based on a size of the shift register array in the accelerator, read feature data required for a current operation cycle of the accelerator from a memory in the accelerator, and write the feature data into the shift register array in the accelerator.

The current operation cycle is a cycle including an operation before the shifting and an operation after a preset quantity of shifts, and the feature data required for the current operation cycle includes the first feature data currently to be processed and feature data to be processed after the shifting. The preset quantity may be determined based on a quantity of feature values required by each operation unit in an operation cycle. For example, for the convolution operation, the preset quantity may be determined based on a quantity of weight values of the convolution kernel. The memory in each accelerator stores a part of feature data that is related to the neural network feature map configured for the accelerator and that does not overlap with other accelerators. For example, the neural network feature map is split in a width (W) direction, to be evenly distributed to each accelerator and stored in the memory of each accelerator. A size of the shift register array is limited, and usually, all the feature data in the memory of the accelerator cannot be written into the shift register array at one time. Therefore, the feature data needs to be written in batches. For example, the feature data required for a next operation cycle is written after a convolution operation (an operation cycle) is completed through a plurality of shifts after each writing.

Step 320, read third feature data required for a next operation cycle of a first pre-configured accelerator from a memory of the first pre-configured accelerator in the plurality of neural network accelerators, and write the third feature data into the target shift register array, wherein the third feature data includes overlapping feature data required by a second pre-configured accelerator in the plurality of neural network accelerators.

The target shift register array is configured to store the overlapping feature data required by the second pre-configured accelerator in the plurality of neural network accelerators during an operation process of the current operation cycle. The first pre-configured accelerator and the second pre-configured accelerator may be determined according to an arrangement rule between a plurality of shift register arrays and the target shift register array. For example, for four accelerators shown in FIG. 1, an accelerator 0 may be set as the first pre-configured accelerator. If the target shift register array is disposed between the accelerator 0 and an accelerator 3, the second pre-configured accelerator is the accelerator 3. The target shift register array is connected to a shift register array of the accelerator 3, and provides the feature data of the overlap area to the accelerator 3 through shifting.

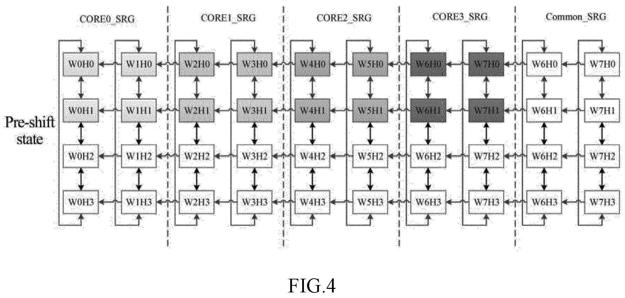

For example, FIG. 4 is a schematic diagram of a connection between shift register arrays according to an exemplary embodiment of this invention. COREi_SRG represents a shift register array of an accelerator i (i=0, 1, 2, or 3), and Common_SRG represents the target shift register array. The shift register array of each accelerator is a 4*2 array that may be bidirectionally and cyclically shifted in a height direction and unidirectionally shifted in the width direction. In other words, the array may be shifted up and down in the height direction, and may be cyclically shifted during movement, without losing a feature value in the height direction, so as to ensure that 9 feature values can be sequentially shifted to a same register to be provided to a same operation unit. A gray register in the shift register array of each accelerator is configured to provide a feature value to the operation unit, that is, to store the first feature data. A white register stores a feature value that needs to be processed after the shifting. In this example, a width of the neural network feature map satisfies that W=16. After the neural network feature map is divided in the width direction, WO-W1 and W8-W9 are stored in a memory of the accelerator 0; W2-W3 and W10-W11 are stored in a memory of an accelerator 1; W4-W5 and W12-W13 are stored in a memory of an accelerator 2; and W6-W7 and W14-W15 are stored in a memory of the accelerator 3. During a first operation, 8 feature values of W0H0-W0H3 and W1H0-W1H3 are written into a shift register array (CORE0_SRG) of the accelerator 0. Other accelerators are shown in FIG. 4. 8 feature values of W8H0-W8H3 and W9H0-W9H3 required for a next operation cycle of the accelerator 0 are written into the target shift register array, to provide the feature data of the overlap area to the accelerator 3. Remaining feature data in the height direction may be written into the shift register array starting from W0H2 after an operation in the width direction is completed, to complete convolution and other operations for a next batch of pixels. The others may be deduced by analogy, until the operation on the neural network feature map is completed. Details are not described herein again. This is only an exemplary connection manner. In practical applications, it may also be set that the shift register array of each accelerator is bidirectionally and cyclically shifted in the width direction and unidirectionally shifted in the height direction; or it may be set that the shift register array of each accelerator is bidirectionally and cyclically shifted in both the width direction and the height direction. This may be specifically set according to actual requirements. A corresponding shift rule needs to be set according to different connection manners, so as to ensure that corresponding operations can be completed.

In an optional embodiment, step 320 of writing the third feature data into the target shift register array may include:
writing the third feature data or overlapping feature data in the third feature data that is required by the second pre-configured accelerator into the target shift register array.

An objective of the target shift register array is to provide the feature data of the overlap area that is required for the current operation cycle to the second pre-configured accelerator. Therefore, based on a size of an operation array of the accelerator and the size of the convolution kernel, a size of the target shift register array may be the same as or different from that of the shift register array in the accelerator. For example, when the operation array is larger than the convolution kernel, for example, if the operation array is 8*8 and the convolution kernel is 5*5, a minimum quantity of registers of the target shift register array in a shift direction between the accelerators may be set to 4 (that is, a width of the convolution kernel is reduced by 1), which may provide the feature data of the overlap area that is required for completing 5*5 convolution to the second pre-configured accelerator. When the size of the target shift register array is different from that of the shift register array in the accelerator, the feature data of the overlap area, required by the second pre-configured accelerator, that is in the third feature data of a next operation cycle of the first pre-configured accelerator may be read from the memory of the first pre-configured accelerator, and may be written into the target shift register array. For example, if the third feature data is 12*8, 12*4 feature data thereof belonging to the overlap area is written into the target shift register array. This may be specifically set according to actual requirements.

In this embodiment, the shift register array within each accelerator and the target shift register array outside the accelerator are connected according to the preset arrangement rule, so as to provide corresponding feature data of the overlap area to each accelerator. In this way, it may be ensured that an edge accelerator after the shifting can also obtain required feature data of the overlap area, thereby improving accuracy and effectiveness of processing of the accelerator.

In an optional embodiment, after step 202 of performing the preset operation on the first feature data and the first weight data by using the first accelerator, to obtain the first operation result, the method further includes:
Step 330, shift, according to the preset shift rule, the second overlapping feature data that is in the third feature data in the target shift register array and that is required by the second pre-configured accelerator to the shift register array in the second pre-configured accelerator.

The specific operation principle for step 330 is similar to that for step 203, and details are not described herein again.

In this embodiment, the feature data of the overlap area is provided for the operation of the second pre-configured accelerator through a shift of the target shift register array.

In an optional embodiment, before step 201 of reading the first feature data related to the neural network feature map from the first shift register array in the first accelerator, and reading the first weight data corresponding to the first feature data from the first buffer in the first accelerator, the method further includes the following steps.

Step 410, divide, according to a preset division rule, the neural network feature map into non-overlapping feature data respectively corresponding to various neural network accelerators.

The preset division rule can be set according to the sizes of the operation array and the shift register array of the accelerator. A principle is that a plurality of accelerators can be enabled to provide required feature data of the overlap area to the operation array of the accelerator through a data shift of the shift register array. According to the preset division rule, the neural network feature map is divided into non-overlapping feature data with a same quantity as the accelerators. Each piece of feature data may include data from multiple discontinuous parts in the neural network feature map. For example, the preset division rule may be a rule for dividing the neural network feature map with a width of 16 in the foregoing example according to the width direction, or may be a rule for dividing by height. The rule for dividing by height is similar to that for dividing by width, which may be specifically set according to actual requirements.

Step 420, write the non-overlapping feature data respectively corresponding to various neural network accelerators into a memory of each neural network accelerator.

Because a relationship for the accelerators to provide the feature data of the overlap area to each other is determined by the arrangement rule of the shift register array, a corresponding relationship between the feature data after the division and each accelerator may be determined based on the arrangement rule of the shift register array of the accelerator. For example, in the foregoing example, WO-W1 and W8-W9 are stored in the memory of the accelerator 0; W2-W3 and W10-W11 are stored in the memory of the accelerator 1; W4-W5 and W12-W13 are stored in the memory of the accelerator 2; and W6-W7 and W14-W15 are stored in the memory of the accelerator 3.

In this embodiment, by dividing the neural network feature map, the non-overlapping feature data after the division is separately written into the memory of each accelerator, so that the memory in the accelerator only needs to store the non-overlapping feature data, thereby reducing demand for storage space of the memory in the accelerator and improving performance of the accelerator.

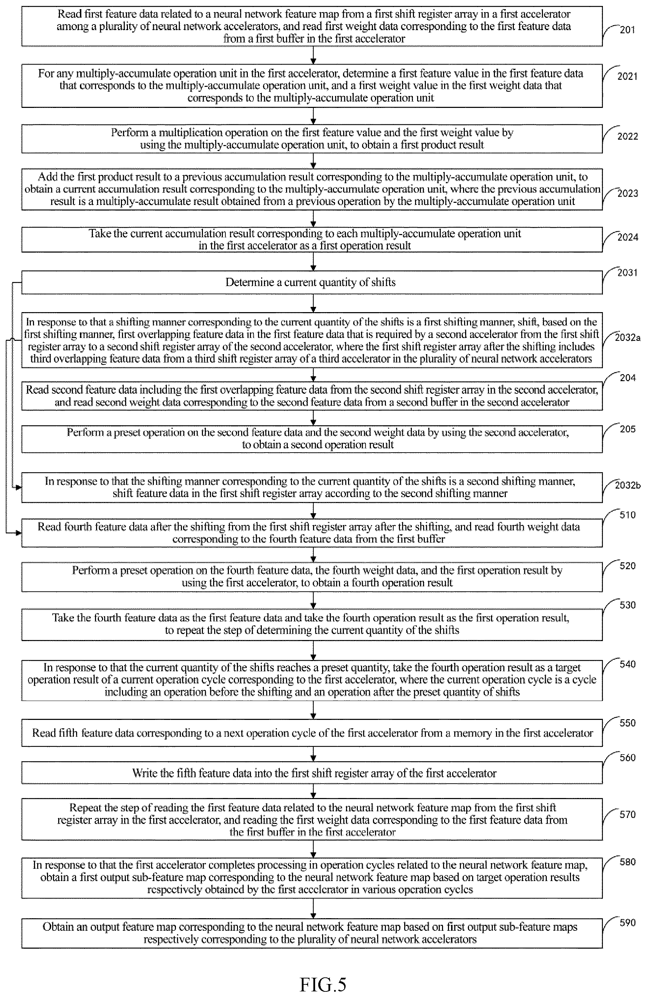

FIG. 5 is a schematic flowchart of method for processing a neural network feature map by using a plurality of accelerators according to still another exemplary embodiment of this invention.

In an optional embodiment, the preset operation is a multiply-accumulate operation. Step 202 of performing the preset operation on the first feature data and the first weight data by using the first accelerator, to obtain the first operation result includes the following steps.

Step 2021, for any multiply-accumulate operation unit in the first accelerator, determine a first feature value in the first feature data that corresponds to the multiply-accumulate operation unit, and a first weight value in the first weight data that corresponds to the multiply-accumulate operation unit.

The multiply-accumulate operation unit is configured to complete multiply-accumulate operations on multiple sets of feature values and weights; and may include a multiplier and an adder, which are configured to complete a multiplication operation and an accumulation operation, respectively. The first feature data includes a feature value (the first feature values) required by each multiply-accumulate operation unit to perform the current operation. A weight value (the first weight value) corresponding to this feature value is determined from the first weight data.

Step 2022, perform a multiplication operation on the first feature value and the first weight value by using the multiply-accumulate operation unit, to obtain a first product result.

The first feature value and the first weight value are input into the multiple-accumulate operation unit, respectively. The multiplication operation is performed on the first feature value and the first weight value by using the multiply-accumulate operation unit, to obtain the first product result.

Step 2023, add the first product result to a previous accumulation result corresponding to the multiply-accumulate operation unit, to obtain a current accumulation result corresponding to the multiply-accumulate operation unit, wherein the previous accumulation result is a multiply-accumulate result obtained from a previous operation by the multiply-accumulate operation unit.

The previous accumulation result may be stored in the adder in the multiply-accumulate operation unit. For example, a register is disposed in the adder to store each accumulation result. The first product result is transmitted to the adder, which completes an addition operation for the first product result and the previous accumulation result, to obtain the current accumulation result. The current accumulation result may be written into the register to replace the previous accumulation result, to be used for a next accumulation operation.

Step 2024, take the current accumulation result corresponding to each multiply-accumulate operation unit in the first accelerator as the first operation result.

When the first accelerator includes a plurality of multiply-accumulate operation units, each multiply-accumulate operation unit may obtain a current accumulation result. Current accumulation results of the plurality of multiply-accumulate operation units serve as the first operation result for the current operation of the first accelerator.

In this embodiment, the multiply-accumulate operation for the feature value and the weight value of the neural network feature map is performed by using the accelerator for the multiply-accumulate operation, which may be used for the convolution operation on the neural network feature map and other processing that requires multiply-accumulate operations with the overlap area. In this way, flexibility of processing various operations is greatly improved, and efficiency of processing various operations may be improved by combining a plurality of accelerators.

In an optional embodiment, the preset shift rule includes a preset quantity of shifts and shifting manners respectively corresponding to each shift. Step 203 of shifting, according to the preset shift rule, the first overlapping feature data that is in the first feature data and that is required by the second accelerator in the plurality of neural network accelerators from the first shift register array to the second shift register array of the second accelerator includes the following steps.

Step 2031, determine a current quantity of shifts.

The preset quantity may be determined based on the size of the convolution kernel. Specifically, the preset quantity may be 1 less than the quantity of the weight values included in the convolution kernel. For example, if the size of the convolution kernel is 3*3, there are 9 weight values, and the preset quantity is 8. The shifting manners may include two manners: shifting in a width direction and shifting in a height direction of the shift register array. Each manner may involve at least one direction. For example, the width direction includes at least one of shifting leftward and shifting rightward, and the height direction includes at least one of shifting upward and shifting downward. This may be specifically set according to actual requirements. The current quantity of the shifts may be maintained in a real-time manner during processing of the current operation cycle. For example, if the current quantity of the shifts is initialized to 0, after a pre-shift operation is completed, it is determined that the current quantity of the shifts is 0, which indicates that no shift has been performed and a first shift is to be performed. After the first shift is performed and an operation is completed, the current quantity of the shifts is updated to 1, which indicates that one shift has been completed and a second shift is to be performed. The others may be deduced by analogy. The current quantity of the shifts may be determined before each shift.

In an optional embodiment, the various shift register arrays may be connected to each other along the width direction or the height direction of the shift register array, which may be specifically set according to actual requirements. Moreover, a quantity of registers included in the shift register array and arrangement of the registers may be set according to a connection direction. One of the two corresponding manners of shifting in the width direction and shifting in the height direction may be referred to as a shifting manner between the accelerators (a first shifting manner), and the other one may be referred to as a shifting manner within the accelerator (a second shifting manner). For example, when the shift register arrays are connected along the width direction, through the shift in the width direction, data in the shift register array of one accelerator may be shifted to the shift register array of another accelerator. In this case, the shift in the width direction is referred to as the first shifting manner, and the shift in the height direction is referred to as the second shifting manner.

In an optional embodiment, the first shifting manner may be subdivided into two opposite directions according to actual requirements. For example, if a shifting manner in the width direction is the first shifting manner, it may include shifting in two directions: shifting leftward and shifting rightward along the width direction. The second shifting manner may also be subdivided into shifting in two opposite directions. For example, if a shifting manner in the height direction is the second shifting manner, it may include shifting in two directions: shifting upward and shifting downward along the height direction. It may also be set that the first shifting manner is shifting in only one direction, or the second shifting manner is shifting in only one direction. It may also be set that both the first shifting manner and the second shifting manner are shifting in two directions, which may be specifically set according to actual requirements. In this case, a target movement direction of the shifting manner corresponding to the current quantity of the shifts may be further determined, and a shift of the data in the shift register array may be controlled according to the target movement direction. For example, if the shifting manner corresponding to the current quantity of the shifts is shifting leftward of the first shifting manner, the data of the shift register array may be controlled to move leftward.

In an optional embodiment, if each movement direction may also be directly used as a movement manner, there may be four movement manners: moving leftward, moving rightward, moving upward, and moving downward. Two of the movement manners belong to shifting manners between the accelerators, and the other two are shifts within the accelerators. Details are not described herein again.

Step 2032a, in response to that the shifting manner corresponding to the current quantity of the shifts is a first shifting manner, shift, based on the first shifting manner, the first overlapping feature data in the first feature data that is required by the second accelerator from the first shift register array to the second shift register array of the second accelerator, wherein the first shift register array after the shifting includes third overlapping feature data from a third shift register array of a third accelerator in the plurality of neural network accelerators.

The first shifting manner is a shifting manner between the accelerators. Therefore, the first overlapping feature data that is in the first feature data and that is required by the second accelerator may be shifted from the first shift register array to the second shift register array of the second accelerator. Meanwhile, the third overlapping feature data that is in the third shift register array of the third accelerator and that is required by the first accelerator may also be shifted to the first shift register array. The first overlapping feature data may be only a part of overlapping feature data of the overlap area. For example, when the convolution kernel is relatively large, the overlap area has a relatively large width or height, and through each shift between the accelerators, the feature data is shifted by only one pixel distance. Therefore, multiple shifts between the accelerators may be required to complete the shift of the data of the overlap area that is required for the current operation cycle.

Step 2032b, in response to that the shifting manner corresponding to the current quantity of the shifts is a second shifting manner, shift feature data in the first shift register array according to the second shifting manner.

The second shifting manner is the shifting manner within the accelerator, which may provide the feature data of the overlap area in the accelerator for the current operation cycle.

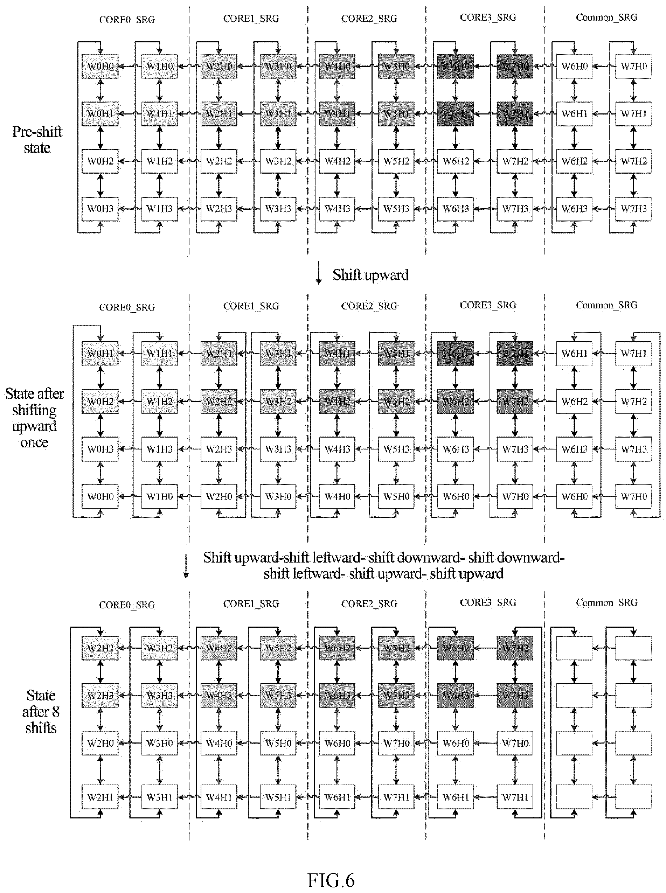

For example, FIG. 6 is a schematic diagram of a data shift process of an operation cycle of a shift register array according to an exemplary embodiment of this invention. The shift register array in this example may be used to provide feature data for a 2*2 MAC array for convolution operations on convolution kernels of 3*3 and less. This example shows a shift process of a 3*3 convolution operation. The preset quantity is 8, and a convolution operation is completed from a pre-shift state through shifting upward-shifting upward-shifting leftward-shifting downward-shifting downward-shifting leftward-shifting upward-shifting upward. Taking a first register in CORE0_SRG as an example, an initial state is W0H0, which becomes W0H1 after shifting upward, becomes W0H2 after shifting upward again, becomes W1H2 after shifting leftward, becomes W1H1 after shifting downward, becomes W1H0 after shifting downward again, becomes W2H0 after shifting leftward, becomes W2H1 after shifting upward, and becomes W2H2 after shifting upward again. The first register provides feature values to a first operation unit in the accelerator 0. It may be learned that, a convolution operation for a W1H1 pixel may be completed by providing 9 feature values of 3*3 to the first operation unit sequentially through shifting.

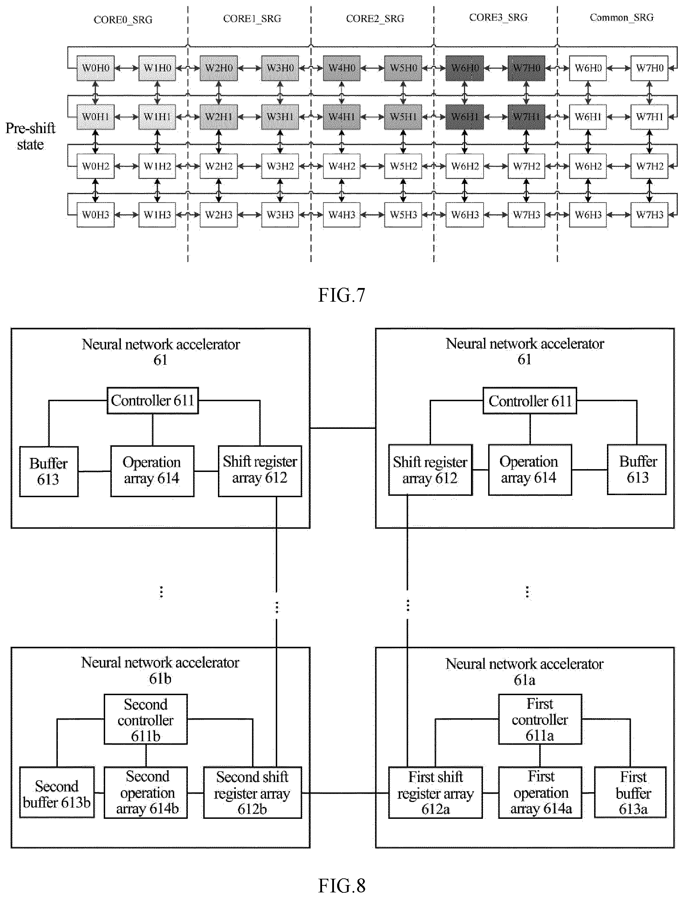

For example, FIG. 7 is a schematic diagram of connections between shift register arrays according to another exemplary embodiment of this invention. In this example, a bidirectional and cyclic shift may be performed in the width direction of the overall shift register, a bidirectional shift may be performed in the height direction, or it may be set that a unidirectional upward shift is performed in the height direction. Under such a connection manner, a shifting order needs to be: shifting leftward - lifting leftward-shifting upward - shifting rightward - shifting rightward - shifting upward - shifting leftward - shifting leftward. Same functions as those in FIG. 6 may be implemented. Details are not described herein again.

For example, on the basis of FIG. 7, if a bidirectional and cyclic shift may also be performed in the height direction of the shift register array, the shifting order may be the shifting order in any one of the foregoing examples in FIG. 6 and FIG. 7. Other shifting orders may also be set according to actual requirements, such as shifting upward - shifting upward - shifting leftward - shifting leftward - shifting downward - shifting downward - shifting rightward - shifting upward, or shifting leftward - lifting leftward - shifting upward - shifting upward - shifting rightward - shifting rightward - shifting downward - shifting leftward, provided that feature values that need to be multiplied and accumulated may be sequentially shifted to the corresponding operation unit. Details are not described herein again.

In practical applications, the size of each shift register array is not limited to the foregoing 4*2, and each shift register array may also be set to a larger or smaller array according to actual requirements. Moreover, according to the size of the convolution kernel, the size of the target shift register array between the accelerators may be the same as or different from that of the shift register array within the accelerator, and a quantity of the accelerators may also be set according to actual requirements. For example, for a MAC array, of which the operation array of the accelerator is T*T (taking 8*8 as an example), if the convolution kernel is M*M (taking 5*5 as an example), the size of the shift register array within each accelerator may be (T+(M-1))*T=12*8, and a quantity in the height direction may also be greater than (T+(M-1)). The size of the target shift register array may be set to (T+(M-1))*(M-1)=12*4, or the quantity in the width direction may also be greater than M-1, for example, 8, provided that required feature data of the overlap area can be provided to the second pre-configured accelerator. A specific implementation principle is similar to that in the foregoing examples, and details are not described here again.

The method in this invention further includes:
Step 510, read fourth feature data after the shifting from the first shift register array after the shifting, and read fourth weight data corresponding to the fourth feature data from the first buffer.

According to different current quantities of the shifts, the fourth feature data may be data including overlapping feature data from a shift register array of an adjacent accelerator (such as feature data after a leftward shift in FIG. 6), or may be internally shifted and updated data (for example, in the foregoing examples, feature values of registers in a first row of CORE0_SRG after an upward shift is updated to feature values of an original second row). After each shift, the feature value in each register of the first shift register array is updated. A new feature value currently required by the operation unit and a corresponding weight value may be read for the corresponding operation unit, so that the multiply-accumulate operation is performed again.

Step 520, perform a preset operation on the fourth feature data, the fourth weight data, and the first operation result by using the first accelerator, to obtain a fourth operation result.

For specific operation principles for steps 510 and 520, reference may be made to the foregoing embodiments.

Step 530, take the fourth feature data as the first feature data and the fourth operation result as the first operation result, to repeat the step of determining the current quantity of the shifts.

A next shift needs to be performed every time after the multiply-accumulate operation is completed. Because a manner for the next shift may be different from that for a previously completed shift, it is needed to determine the current quantity of the shifts, so as to determine the manner for the next shift. Referring to the foregoing example, there are 8 shifts, where a shifting manner corresponding to the first shift is shifting upward, a shifting manner corresponding to the second shift is shifting upward, a shifting manner corresponding to a third shift is shifting leftward, and the like. Step 2032a or 2032b, and the following steps 510 and 520 are performed based on the shifting manner corresponding to the current quantity.

Step 540, in response to that the current quantity of the shifts reaches a preset quantity, take the fourth operation result as a target operation result of a current operation cycle corresponding to the first accelerator, wherein the current operation cycle is a cycle including an operation before the shifting and an operation after the preset quantity of shifts.

Whether the current quantity of the shifts reaches the preset quantity may be determined every time after step 2031 is performed, or may be determined every time after step 520 is performed. This may be specifically set according to actual requirements. For example, after step 2031, whether the current quantity of the shifts reaches the preset quantity is determined. If the preset quantity is not reached, step 2032a or 2032b is performed. If the preset quantity is reached, the fourth operation result that serves as the first operation result is taken as the target operation result of the current operation cycle. For the convolution operation, a target operation result of an operation cycle of an accelerator is a convolutional operation result, of pixels with a same quantity as operation units, that is completed by an operation array of the accelerator in the current operation cycle.

In an optional embodiment, after step 502, the method may further include updating the current quantity of the shifts. Specifically, if the current quantity of the shifts may be increased by 1, when the current quantity of the shifts is determined again, it is equivalent to that a previous quantity is increased by 1. Time for updating the current quantity of the shifts is not limited.

In this embodiment, the feature data of the overlap area is reused through the preset quantity of shifts, thereby ensuring that each accelerator completes the multiply-accumulate operation without storing the feature data of the overlap area. In this way, the data of the overlap area may be reused when storage space in the accelerator is relatively small, thereby reducing wastes of bandwidth resources of the NOC between the accelerators and reducing the power consumption, so as to effectively improve the performance of the accelerator.

In an optional embodiment, after step 540 of in response to that the current quantity of the shifts reaches the preset quantity, taking the fourth operation result as the target operation result of the current operation cycle corresponding to the first accelerator, the method further includes the following steps.

Step 550, read fifth feature data corresponding to a next operation cycle of the first accelerator from a memory in the first accelerator.

Step 560, write the fifth feature data into the first shift register array of the first accelerator.

Specific operation principles for steps 550 and 560 are consistent to the operation principle for step 310, and details are not described again.

Step 570, repeat the step of reading the first feature data related to the neural network feature map from the first shift register array in the first accelerator, and reading the first weight data corresponding to the first feature data from the first buffer in the first accelerator.

When step 201 is repeated for the first time, the first feature data is feature data, in the fifth feature data, that is written into some of registers that provide feature values to the operation unit. When step 201 is repeated in the following, the first feature data is shifted feature data in said some of registers.

Step 580, in response to that the first accelerator completes processing in operation cycles related to the neural network feature map, obtain a first output sub-feature map corresponding to the neural network feature map based on target operation results respectively obtained by the first accelerator in various operation cycles.

Whether the first accelerator completes the processing in the operation cycles related to the neural network feature map may be determined based on a size of the feature map, a division rule, a quantity of operations that need to be completed by each accelerator after the division, and the like. For example, a quantity of clock cycles that need to be processed by each accelerator may be calculated based on the size of the feature map and the division rule and in combination with a size of the operation array of the accelerator. During the calculation process, whether an operation is completed is determined by counting the clock cycles.

Step 590, obtain an output feature map corresponding to the neural network feature map based on first output sub-feature maps respectively corresponding to the plurality of neural network accelerators.

Specific representations of the first output sub-feature map may be set according to actual requirements. For example, representations of the first output sub-feature map may vary due to different division rules. If the division rule allows each accelerator to store multiple discontinuous parts of the neural network feature map, such as the foregoing WO-W1 and W8-W9, the first output sub-feature map may include subgraphs respectively corresponding to various parts, and a pixel position may be marked. The first output sub-feature maps of the plurality of accelerators are spliced according to the pixel positions to obtain the output feature map. Alternatively, the first output sub-feature map may have a same size as the output feature map, and valid data only includes an operation result of a part for which the accelerator is responsible. A part that is not completed by the accelerator may be set to 0. The first output sub-feature maps of the plurality of accelerators are added together to obtain the output feature map corresponding to the neural network feature map. A specific representation is not limited, provided that the output feature map corresponding to the neural network feature map can be obtained.

In an optional embodiment, each accelerator serves as the first accelerator, for which steps 550 and 560 are synchronously performed. Moreover, after step 560, overlapping feature data required by the second pre-configured accelerator in a next operation cycle is read from the memory of the first pre-configured accelerator, and is written into the target shift register array. Operation arrays of the plurality of accelerators perform operations synchronously. After the operations are completed, a plurality of shift register arrays and the target shift register array are shifted synchronously, so that the neural network feature map is processed through collaborative work of the plurality of accelerators, thereby obtaining the output feature map.

The foregoing embodiments of this invention may be implemented separately or in any combination without conflict. This may be specifically set according to actual requirements, and is not limited in this invention.

Any method for processing a neural network feature map by using a plurality of accelerators provided in the embodiments of this invention may be implemented by any suitable device with a data processing capability, including but not limited to a terminal device and a server. Alternatively, any method for processing a neural network feature map by using a plurality of accelerators provided in the embodiments of this invention may be implemented by a processor. For example, the processor invokes corresponding instructions stored in the memory to implement any method for processing a neural network feature map by using a plurality of accelerators described in the embodiments of this invention. Details are not described below again.

### Exemplary apparatus

FIG. 8 is a schematic diagram of a structure of apparatus for processing a neural network feature map by using a plurality of accelerators according to an exemplary embodiment of this invention. The apparatus in this embodiment may be configured to implement the corresponding method embodiments of this invention. The apparatus shown in FIG. 8 includes a plurality of neural network accelerators 61. Each neural network accelerator 61 includes a controller 611, a shift register array 612, a buffer 613, and an operation array 614 for a preset operation.

The controller 611 is respectively connected to the shift register array 612, the buffer 613, and the operation array 614, to control the shift register array 612, the buffer 613, and the operation array 614 to complete the preset operation. The buffer 613 is also connected to the operation array 614, to provide weight data required for the preset operation to the operation array 614. The shift register array 612 is connected to the operation array 614, to provide feature data required for the preset operation to the operation array 614. The plurality of neural network accelerators 61 are sequentially connected to each other by using the shift register array 612, to achieve shift multiplexing of feature data between the accelerators. The plurality of neural network accelerators 61 may work under control of an external synchronous clock.

For a first accelerator 61a in the plurality of neural network accelerators (accelerators for short) (In FIG. 8, only the neural network accelerator 61a is shown as an example. In practical applications, the first accelerator may be any one of the plurality of neural network accelerators that needs to provide overlapping feature data to other accelerators), a first controller 611a in the first accelerator 61a reads first feature data related to the neural network feature map from a first shift register array 612a in the first accelerator 61a, and reads first weight data corresponding to the first feature data from a first buffer 613a in the first accelerator 61a. The first controller 611a controls a first operation array 614a in the first accelerator 61a to perform a preset operation on the first feature data and the first weight data, to obtain a first operation result. The first controller 611a controls, according to a preset shift rule, the first shift register array 612a to shift first overlapping feature data that is in the first feature data and that is required by a second accelerator 61b (a neural network accelerator 61b) in the plurality of neural network accelerators to a second shift register array 612b of the second accelerator 61b. A second controller 611b in the second accelerator 61b reads second feature data including the first overlapping feature data from the second shift register array 612b, and reads second weight data corresponding to the second feature data from a second buffer 613b in the second accelerator 61b. The second controller 611b controls a second operation array 614b in the second accelerator 61b to perform a preset operation on the second feature data and the second weight data, to obtain a second operation result.

For any accelerator 61, the controller 611 thereof may be a control logic unit in the accelerator 61 that is used for operational control. Under triggering of an external clock, the accelerator 611 may be controlled to complete some of operations for the neural network feature map in this invention. The plurality of accelerators 61 operate collaboratively to obtain an output feature map corresponding to the neural network feature map. The buffer 613 is configured to cache weight data required for operations. In each operation cycle, weight data required for this operation cycle may be written into the buffer 613 by the controller 611. The operation array 614 is used for accelerated operations for the feature data. The operation array 614 may be a MAC array, and a size of the operation array 614 may be set according to actual requirements. For example, the operation array 614 may be a 2*2 array, a 4*4 array, a 5*5 array, or an 8*8 array. A size of the shift register array 612 may be set according to actual requirements, which may be specifically determined based on the size of the operation array 614 and a specific condition of a required operation. For details, reference may be made to the foregoing method embodiments, and details are not described herein again. A quantity of the accelerators 61 may be set according to actual requirements; for example, it may be set to 2, 4 or 8. This is not specifically limited. Shift register arrays 612 in the plurality of accelerators 61 are connected according to a certain arrangement rule, so that feature data of an overlap area can be shifted between the accelerators, thereby achieving reuse of the feature data of the overlap area. For a specific flow of processing the neural network feature map by using a plurality of accelerators, reference may be made to the corresponding method embodiments, and details are not described herein again.

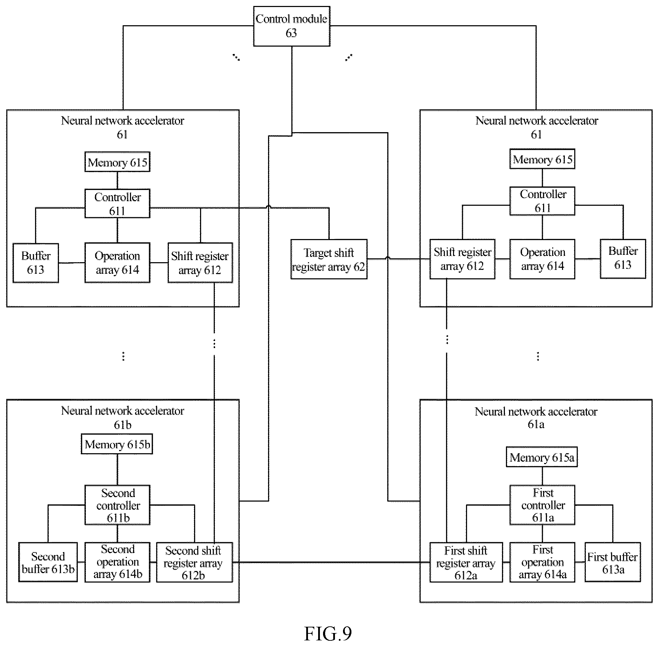

FIG. 9 is a schematic diagram of a structure of apparatus for processing a neural network feature map by using a plurality of accelerators according to another exemplary embodiment of this invention.

In an optional embodiment, each neural network accelerator 61 further includes a memory 615 that is connected to the controller 611. The apparatus in this invention further includes a target shift register array 62 that is connected to the shift register array 612 of a second pre-configured accelerator in the plurality of neural network accelerators 61. The target shift register array 62 is connected to the shift register array 612 in each neural network accelerator 61 according to a preset arrangement rule. The specific preset arrangement rule may be that the shift register array 612 in each neural network accelerator 61 is connected in series to the target shift register array 62 in a preset order and in a preset direction of the array. The preset order may be an arrangement order of the plurality of neural network accelerators, and the preset direction refers to a width direction or a height direction of the shift register array 612, which may be specifically set according to actual requirements. For example, the shift register array 612 is a 4*2 array. To be specific, there are 4 rows of registers in the height direction and 2 columns of registers in the width direction. N shift register arrays 612 are sequentially connected in the width direction of the array, and the target shift register array 62 is connected to a last shift register array 612 to form an entire shift register array of 4 rows and 2 (N+1) columns. Moreover, a movable direction and circularity of the entire shift register array in the width direction of the array may be set according to actual requirements. For example, leftward shifting or rightward shifting may be performed in the width direction, or both leftward shifting and rightward shifting may be performed. The leftward shifting may be cyclic or non-cyclic leftward shifting. Similarly, the rightward shifting may be cyclic or non-cyclic rightward shifting. Memories of the first accelerator 61a and the second accelerator 61b are represented by using 615a and 615b, respectively.

For each accelerator 61 in the plurality of neural network accelerators, the controller 611 in the accelerator 61 reads, based on a size of the shift register array 612 in the accelerator 61, feature data required for a current operation cycle of the accelerator 61 from the memory 615 in the accelerator 61, and writes the feature data into the shift register array 612 in the accelerator 61. The current operation cycle is a cycle including an operation before the shifting and a cycle of an operation after a preset quantity of shifts. The feature data required for the current operation cycle includes the first feature data currently to be processed and feature data to be processed after the shifting. The controller 611 of a first pre-configured accelerator in the plurality of neural network accelerators 61 reads third feature data of a next operation cycle of the first pre-configured accelerator from a memory 613 of the first pre-configured accelerator, and writes the third feature data into the target shift register array 62. The third feature data includes overlapping feature data required by the second pre-configured accelerator in the plurality of neural network accelerators.

The controller 611 in the accelerator 61 may be connected to the memory 615 through a NOC in the accelerator. The memory 615 may be a SRAM (static random access memory) in the accelerator 61. For a specific operation principle of this embodiment, reference may be made to the foregoing method embodiments, and details are not described herein again.

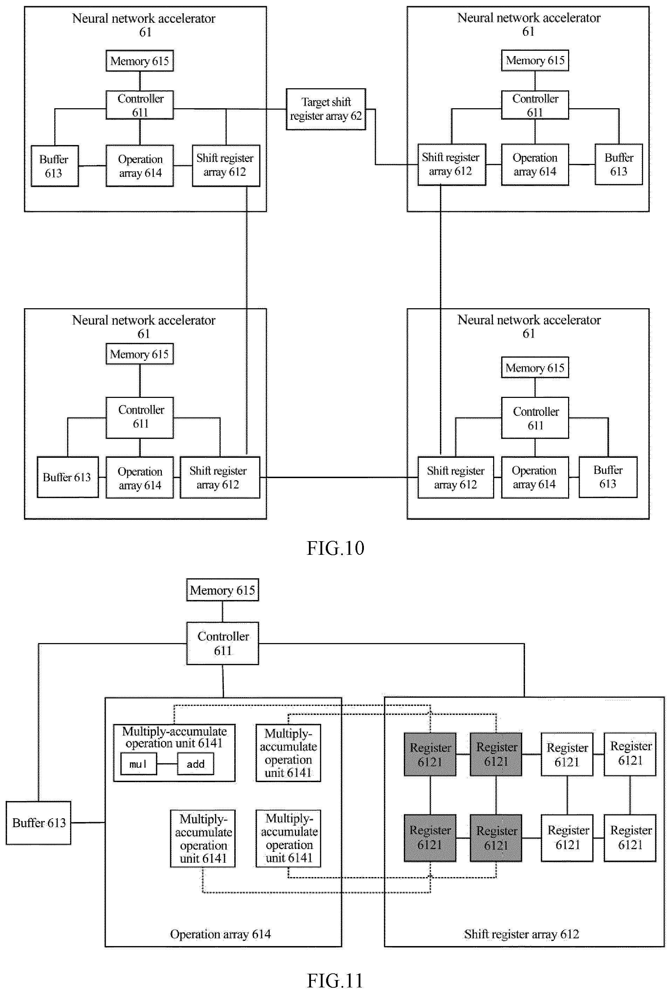

In an optional example, FIG. 10 is a schematic diagram of connections between four accelerators and a target shift register array according to an exemplary embodiment of this invention. The shift register arrays 612 in the four accelerators 61 are sequentially connected to the target shift register array 62, so as to shift data between the accelerators. A plurality of accelerators 61 may be synchronized by using an external clock. For a specific structure of the shift register array 612 in each accelerator 61 and the target shift register array 62, reference may be made to the examples in the foregoing method embodiments, and details are not described herein again.

In an optional embodiment, the controller 611 of the first pre-configured accelerator is further configured to control, according to a preset shift rule, the target shift register array 62 to shift second overlapping feature data in the third feature data that is required by the second pre-configured accelerator to the shift register array 62 in the second pre-configured accelerator.

In an optional embodiment, the apparatus in this invention further includes a control module 63 that is connected to each neural network accelerator 61.

The control module 63 is configured to divide, according to a preset division rule, the neural network feature map into non-overlapping feature data respectively corresponding to various neural network accelerators 61; and write the non-overlapping feature data respectively corresponding to various neural network accelerators 61 into the memory 615 of each neural network accelerator 61. The preset division rule may be set based on the sizes of the operation array and the shift register array of the accelerator, and a principle is that a plurality of accelerators are enabled to provide required feature data of the overlap area to the operation array of the accelerator through a data shift of the shift register array. For example, the preset division rule may be a rule for dividing the neural network feature map according to the width direction, or may be a rule for dividing by height.

The control module 63 may be a control logic device except the accelerator in the apparatus, and may be configured to control the plurality of accelerators. This may be specifically set according to actual requirements. The control module 63 may also be configured to generate working clocks of various accelerators, so as to trigger periodic operations of the accelerators.

FIG. 11 is a schematic diagram of a specific structure of an accelerator according to an exemplary embodiment of this invention.

In an optional embodiment, the preset operation is a multiply-accumulate operation. The operation array 614 includes a plurality of multiply-accumulate operation units 6141, and each multiply-accumulate operation unit 6141 includes a multiplier mul and an adder add. Each multiply-accumulate operation unit 6141 may be connected to a register 6121 in the corresponding shift register array 612. The register 6121 provides a feature value required for the multiply-accumulate operation to the multiply-accumulate operation unit 6141. Each multiply-accumulate operation unit 6141 may also be connected to the buffer 613, which provides a weight value required for the multiply-accumulate operation to the multiply-accumulate operation unit 6141.

In an optional embodiment, the shift register array 612 includes multiple rows and columns of registers 6121. The shift register array may be shifted along a row direction (the width direction) and/or a column direction (the height direction). This may be specifically set according to actual requirements. In FIG. 11, an operation array 614 of 2*2 is used as an example, and the shift register array 612 being a 2*8 (which may also be 8*2) array is used as an example. Four gray registers provide feature values to four multiply-accumulate operation units, respectively. The gray register may be directly used as input of each multiply-accumulate operation unit to be connected to each multiply-accumulate operation unit. The feature value in the gray register may also be read by using the controller, and be transmitted to an input end of the multiply-accumulate operation unit. This may be specifically set according to actual requirements. Four white registers store feature values that need to be processed after shifting, and the feature values stored in the white registers are shifted to the gray register through shifting, to be provided to the multiply-accumulate operation unit.

In an optional embodiment, the first controller 611a is specifically configured to:
for any multiply-accumulate operation unit 6141 in the first operation array 614a, determine a first feature value in the first feature data that corresponds to the multiply-accumulate operation unit 6141, and a first weight value in the first weight data that corresponds to the multiply-accumulate operation unit 6141; control the multiplier mul of the multiply-accumulate operation unit 6141 to perform a multiplication operation on the first feature value and the first weight value, to obtain a first product result; control the adder add of the multiply-accumulate operation unit 6141 to add the first product result to a previous accumulation result corresponding to the multiply-accumulate operation unit, to obtain a current accumulation result corresponding to the multiply-accumulate operation unit, wherein the previous accumulation result is a multiply-accumulate result obtained from a previous operation by the multiply-accumulate operation unit; and take the current accumulation result corresponding to each multiply-accumulate operation unit 6141 in the first accelerator 61a as the first operation result.

In an optional embodiment, the preset shift rule includes a preset quantity of shifts and shifting manners respectively corresponding to various shifts; and the first controller 611a is specifically configured to:
determine a current quantity of shifts; in response to that the shifting manner corresponding to the current quantity of the shifts is a first shifting manner, control, based on the first shifting manner, the first shift register array 612a to shift the first overlapping feature data in the first feature data that is required by the second accelerator 61b to the second shift register array 612b of the second accelerator 61b, wherein the first shift register array 612a after the shifting includes third overlapping feature data from a third shift register array of a third accelerator in the plurality of neural network accelerators; and in response to that the shifting manner corresponding to the current quantity of the shifts is a second shifting manner, control the first shift register array 612a to shift feature data thereof according to the second shifting manner.

The first controller 611a is further configured to:
read fourth feature data after the shifting from the first shift register array 612a after the shifting, and read fourth weight data corresponding to the fourth feature data from the first buffer 613a; control the first operation array 614a to perform a preset operation on the fourth feature data, the fourth weight data, and the first operation result, to obtain a fourth operation result; take the fourth feature data as the first feature data and take the fourth operation result as the first operation result, to repeat the step of determining the current quantity of the shifts; and in response to that the current quantity of the shifts reaches the preset quantity, take the fourth operation result as a target operation result of a current operation cycle corresponding to the first accelerator 61a, wherein the current operation cycle is a cycle including an operation before the shifting and a cycle of an operation after the preset quantity of shifts.

In an optional embodiment, the apparatus further includes a control module 63.

The first controller 611a is further configured to:
read fifth feature data corresponding to a next operation cycle of the first accelerator 61a from a memory 615a in the first accelerator 61a; write the fifth feature data into the first shift register array 612a of the first accelerator 61a; repeat the step of reading the first feature data related to the neural network feature map from the first shift register array 612a in the first accelerator 61a, and reading the first weight data corresponding to the first feature data from the first buffer 613a in the first accelerator 61a; in response to that the first accelerator 61a completes processing in operation cycles related to the neural network feature map, obtain a first output sub-feature map corresponding to the neural network feature map based on target operation results respectively obtained by the first accelerator 61a in various operation cycles; and control the control module 63 to be configured to obtain an output feature map corresponding to the neural network feature map based on first output sub-feature maps respectively corresponding to the plurality of neural network accelerators.

For a specific control principle of the first controller 611a, reference may be made to the foregoing corresponding method embodiments, and details are not described herein again.

In an optional embodiment, the accelerator 61 may further include other operation units related to a neural network, such as operation units for loading, storing, and pooling. This may be specifically set according to actual requirements.

### Exemplary electronic device

An embodiment of this invention further provides an electronic device, including: a memory, configured to store a computer program; and
a processor, configured to execute the computer program stored in the memory, where when the computer program is executed, the method for processing a neural network feature map by using a plurality of accelerators according to any one of the foregoing embodiments of this invention is implemented.

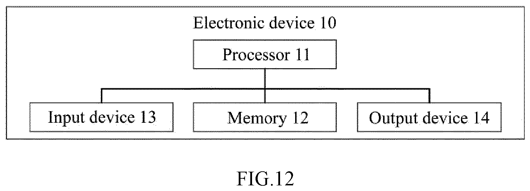

FIG. 12 is a schematic diagram of a structure of an electronic device according to an application embodiment of this invention. In this embodiment, an electronic device 10 includes one or more processors 11 and a memory 12.

The processor 11 may be a central processing unit (CPU) or another form of processing unit having a data processing capability and/or an instruction execution capability, and may control another component in the electronic device 10 to perform a desired function.

The memory 12 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the program instruction to implement the method according to various embodiments of this invention that are described above and/or other desired functions. Various contents such as an input signal, a signal component, and a noise component may also be stored in the computer readable storage medium.

In an example, the electronic device 10 may further include an input device 13 and an output device 14. These components are connected to each other through a bus system and/or another form of connection mechanism (not shown).

For example, the input device 13 may be a microphone or a microphone array, which is configured to capture an input signal of a sound source.

In addition, the input device 13 may further include, for example, a keyboard and a mouse.

The output device 14 may output various information to the outside, including determined distance information, direction information, and the like. The output device 14 may include, for example, a display, a speaker, a printer, a communication network, and a remote output device connected by the communication network.

Certainly, for simplicity, FIG. 12 shows only some of components in the electronic device 10 that are related to this invention, and components such as a bus and an input/output interface are omitted. In addition, according to specific application situations, the electronic device 10 may further include any other appropriate components.

### Exemplary computer program product and computer readable storage medium

In addition to the foregoing method and device, the embodiments of this invention may also relate to a computer program product, which includes computer program instructions. When the computer program instructions are run by a an apparatus according to any of claims 8 to 12, the apparatus is enabled to perform the steps, of the method according to the embodiments of this invention, that are described in the "exemplary method" part of this specification.

The computer program product may be program codes, written with one or any combination of a plurality of programming languages, that is configured to perform the operations in the embodiments of this invention. The programming languages include an object-oriented programming language such as Java or C++, and further include a conventional procedural programming language such as a "C" language or a similar programming language. The program codes may be entirely or partially executed on a user computing device, executed as an independent software package, partially executed on the user computing device and partially executed on a remote computing device, or entirely executed on the remote computing device or a server.

In addition, the embodiments of this invention may further relate to a computer readable storage medium, which stores a computer program instruction. When the computer program instruction is run by the apparatus according to any of claims 8 to 12, the apparatus is enabled to perform the steps, of the method according to the embodiments of this invention, that are described in the "exemplary method" part of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this invention are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this invention must be implemented by using the foregoing specific details.

The foregoing descriptions are given for illustration and description. In addition, the description is not intended to limit the embodiments of this invention to forms disclosed herein. Although a plurality of exemplary aspects and embodiments have been discussed above, a person skilled in the art may recognize certain variations, modifications, changes, additions, and subcombinations thereof.

## Claims

1. A method for processing a neural network feature map by using a plurality of accelerators, **characterized in that** the method comprises:
reading (step 201) first feature data related to the neural network feature map from a first shift register array in a first accelerator among a plurality of neural network accelerators, and reading first weight data corresponding to the first feature data from a first buffer in the first accelerator, wherein the shift register arrays in various neural network accelerators are connected according to a certain arrangement rule;
performing (step 202) a preset operation on the first feature data and the first weight data by using the first accelerator, to obtain a first operation result;
shifting (step 203), according to a preset shift rule, first overlapping feature data that is in the first feature data and that is required by a second accelerator in the plurality of neural network accelerators from the first shift register array to a second shift register array of the second accelerator, wherein the second accelerator is an adjacent accelerator of the first accelerator, and the preset shift rule is determined based on a connection manner between the shift register arrays;
reading (step 204) second feature data comprising the first overlapping feature data from the second shift register array in the second accelerator, and reading second weight data corresponding to the second feature data from a second buffer in the second accelerator; and
performing (step 205) a preset operation on the second feature data and the second weight data by using the second accelerator, to obtain a second operation result.

2. The method according to claim 1, wherein a shift register array in each neural network accelerator is connected to a target shift register array outside the plurality of neural network accelerators according to a preset arrangement rule; and
before the reading (step 201) first feature data related to the neural network feature map from a first shift register array in a first accelerator, and reading first weight data corresponding to the first feature data from a first buffer in the first accelerator, the method further comprises:
for each accelerator in the plurality of neural network accelerators, reading (step 310), based on a size of the shift register array in the accelerator, feature data required for a current operation cycle of the accelerator from a memory in the accelerator, and writing the feature data into the shift register array in the accelerator, wherein the current operation cycle is a cycle including an operation before the shifting and an operation after a preset quantity of shifts, and the feature data required for the current operation cycle comprises the first feature data currently to be processed and feature data to be processed after the shifting; and
reading (step 320) third feature data required for a next operation cycle of a first pre-configured accelerator from a memory of the first pre-configured accelerator in the plurality of neural network accelerators, and writing the third feature data into the target shift register array, wherein the third feature data comprises overlapping feature data required by a second pre-configured accelerator in the plurality of neural network accelerators.

3. The method according to claim 2, wherein after the performing (step 202) a preset operation on the first feature data and the first weight data by using the first accelerator, to obtain a first operation result, the method further comprises:
shifting (step 330), according to the preset shift rule, second overlapping feature data that is in the third feature data in the target shift register array and that is required by the second pre-configured accelerator to a shift register array in the second pre-configured accelerator.

4. The method according to claim 1, wherein before the reading (step 201) first feature data related to the neural network feature map from a first shift register array in a first accelerator, and reading first weight data corresponding to the first feature data from a first buffer in the first accelerator, the method further comprises:
dividing (step 410), according to a preset division rule, the neural network feature map into non-overlapping feature data respectively corresponding to various neural network accelerators; and
writing (step 420) the non-overlapping feature data respectively corresponding to various neural network accelerators into a memory of each neural network accelerator.

5. The method according to claim 1, wherein the preset operation is a multiply-accumulate operation; and
the performing (step 202) a preset operation on the first feature data and the first weight data by using the first accelerator, to obtain a first operation result comprises:
for any multiply-accumulate operation unit in the first accelerator, determining (step 2021) a first feature value in the first feature data that corresponds to the multiply-accumulate operation unit, and a first weight value in the first weight data that corresponds to the multiply-accumulate operation unit;
performing (step 2022) a multiplication operation on the first feature value and the first weight value by using the multiply-accumulate operation unit, to obtain a first product result;
adding (step 2023) the first product result to a previous accumulation result corresponding to the multiply-accumulate operation unit, to obtain a current accumulation result corresponding to the multiply-accumulate operation unit, wherein the previous accumulation result is a multiply-accumulate result obtained from a previous operation by the multiply-accumulate operation unit; and
taking (step 2024) the current accumulation result corresponding to each multiply-accumulate operation unit in the first accelerator as the first operation result.

6. The method according to claim 1, wherein the preset shift rule comprises a preset quantity of shifts and shifting manners respectively corresponding to various shifts;
the shifting (step 203), according to a preset shift rule, first overlapping feature data that is in the first feature data and that is required by a second accelerator in the plurality of neural network accelerators from the first shift register array to a second shift register array of the second accelerator comprises:
determining (step 2031) a current quantity of shifts;
in response to that the shifting manner corresponding to the current quantity of the shifts is a first shifting manner, shifting (step 2032a), based on the first shifting manner, the first overlapping feature data in the first feature data that is required by the second accelerator from the first shift register array to the second shift register array of the second accelerator, wherein the first shift register array after the shifting comprises third overlapping feature data from a third shift register array of a third accelerator in the plurality of neural network accelerators; and
in response to that the shifting manner corresponding to the current quantity of the shifts is a second shifting manner, shifting (step 2032b) feature data in the first shift register array according to the second shifting manner; and
the method further comprises:
reading (step 510) fourth feature data after the shifting from the first shift register array after the shifting, and reading fourth weight data corresponding to the fourth feature data from the first buffer;
performing (step 520) a preset operation on the fourth feature data, the fourth weight data, and the first operation result by using the first accelerator, to obtain a fourth operation result;
taking (step 530) the fourth feature data as the first feature data and taking the fourth operation result as the first operation result, to repeat the step of determining the current quantity of the shifts; and
in response to that the current quantity of the shifts reaches a preset quantity, taking (step 540) the fourth operation result as a target operation result of a current operation cycle corresponding to the first accelerator, wherein the current operation cycle is a cycle including an operation before the shifting and an operation after the preset quantity of shifts.

7. The method according to claim 6, wherein after the in response to that the current quantity of the shifts reaches a preset quantity, taking (step 540) the fourth operation result as a target operation result of a current operation cycle corresponding to the first accelerator, the method further comprises:
reading (step 550) fifth feature data corresponding to a next operation cycle of the first accelerator from a memory in the first accelerator;
writing (step 560) the fifth feature data into the first shift register array of the first accelerator;
repeating (step 570) the step of the reading first feature data related to the neural network feature map from a first shift register array in a first accelerator, and reading first weight data corresponding to the first feature data from a first buffer in the first accelerator;
in response to that the first accelerator completes processing in operation cycles related to the neural network feature map, obtaining (step 580) a first output sub-feature map corresponding to the neural network feature map based on target operation results respectively obtained by the first accelerator in various operation cycles; and
obtaining (step 590) an output feature map corresponding to the neural network feature map based on first output sub-feature maps respectively corresponding to the plurality of neural network accelerators.

8. An apparatus for processing a neural network feature map by using a plurality of accelerators, **characterized in that** the apparatus comprises a plurality of neural network accelerators (61), wherein each neural network accelerator (61) comprises a controller (611), a shift register array (612), a buffer (613), and an operation array (614) for a preset operation;
for a first accelerator (61a) in the plurality of neural network accelerators, a first controller (611a) in the first accelerator (61a) reads first feature data related to the neural network feature map from a first shift register array (612a) in the first accelerator (61a), and reads first weight data corresponding to the first feature data from a first buffer (613a) in the first accelerator (61a), wherein the shift register arrays in various neural network accelerators are connected according to a certain arrangement rule;
the first controller (611a) controls a first operation array (614a) in the first accelerator (61a) to perform a preset operation on the first feature data and the first weight data, to obtain a first operation result;
the first controller (611a) controls, according to a preset shift rule, the first shift register array (612a) to shift first overlapping feature data that is in the first feature data and that is required by a second accelerator (61b) in the plurality of neural network accelerators to a second shift register array (612b) of the second accelerator (61b), wherein the second accelerator is an adjacent accelerator of the first accelerator, and the preset shift rule is determined based on a connection manner between the shift register arrays;
a second controller (611b) in the second accelerator (61b) reads second feature data comprising the first overlapping feature data from the second shift register array (612b), and reads second weight data corresponding to the second feature data from a second buffer (613b) in the second accelerator (61b); and
the second controller (611b) controls a second operation array (614b) in the second accelerator (61b) to perform a preset operation on the second feature data and the second weight data, to obtain a second operation result.

9. The apparatus according to claim 8, wherein each neural network accelerator (61) further comprises a memory (615); the apparatus further comprises a target shift register array (62); and the target shift register array (62) is connected to the shift register array (612) in each neural network accelerator (61) according to a preset arrangement rule;
for each accelerator (61) in the plurality of neural network accelerators, the controller (611) in the accelerator (61) reads, based on a size of the shift register array (612) in the accelerator (61), feature data required for a current operation cycle of the accelerator (61) from the memory (615) in the accelerator (61), and writes the feature data into the shift register array (612) in the accelerator (61), wherein the current operation cycle is a cycle including an operation before the shifting and an operation after a preset quantity of shifts, and the feature data required for the current operation cycle comprises the first feature data currently to be processed and feature data to be processed after the shifting; and
the controller (611) of a first pre-configured accelerator in the plurality of neural network accelerators (61) reads third feature data required for a next operation cycle of the first pre-configured accelerator from the memory (615) of the first pre-configured accelerator, and writes the third feature data into the target shift register array (62), wherein the third feature data comprises overlapping feature data required by a second pre-configured accelerator in the plurality of neural network accelerators.

10. The apparatus according to claim 8, further comprising:
a control module (63), connected to the neural network accelerators (61), respectively,
wherein the control module (63) is configured to divide, according to a preset division rule, the neural network feature map into non-overlapping feature data respectively corresponding to various neural network accelerators (61); and write the non-overlapping feature data respectively corresponding to various neural network accelerators (61) into the memory (615) of each neural network accelerator (61).

11. The apparatus according to claim 8, wherein the preset operation is a multiply-accumulate operation; the operation array (614) comprises a plurality of multiply-accumulate operation units (6141); and each multiply-accumulate operation unit (6141) comprises a multiplier (mul) and an adder (add); and
the first controller (611a) is specifically configured to:
for any multiply-accumulate operation unit (6141) in the first operation array (614a), determine a first feature value in the first feature data that corresponds to the multiply-accumulate operation unit (6141), and a first weight value in the first weight data that corresponds to the multiply-accumulate operation unit (6141);
control the multiplier (mul) of the multiply-accumulate operation unit (6141) to perform a multiplication operation on the first feature value and the first weight value, to obtain a first product result;
control the adder (add) of the multiply-accumulate operation unit (6141) to add the first product result to a previous accumulation result corresponding to the multiply-accumulate operation unit, to obtain a current accumulation result corresponding to the multiply-accumulate operation unit, wherein the previous accumulation result is a multiply-accumulate result obtained from a previous operation by the multiply-accumulate operation unit; and
take the current accumulation result corresponding to each multiply-accumulate operation unit (6141) in the first accelerator (61a) as the first operation result.

12. The apparatus according to claim 8, wherein the preset shift rule comprises a preset quantity of shifts and shifting manners respectively corresponding to various shifts;
the first controller (611a) is specifically configured to:
determine a current quantity of shifts;
in response to that the shifting manner corresponding to the current quantity of the shifts is a first shifting manner, control, based on the first shifting manner, the first shift register array (612a) to shift the first overlapping feature data in the first feature data that is required by the second accelerator (61b) to the second shift register array (612b) of the second accelerator (61b), wherein the first shift register array (612a) after the shifting comprises third overlapping feature data from a third shift register array of a third accelerator in the plurality of neural network accelerators; and
in response to that the shifting manner corresponding to the current quantity of the shifts is a second shifting manner, control the first shift register array (612a) to shift feature data thereof according to the second shifting manner; and
the first controller (611a) is further configured to:
read fourth feature data after the shifting from the first shift register array (612a) after the shifting, and read fourth weight data corresponding to the fourth feature data from the first buffer (613a);
control the first operation array (614a) to perform a preset operation on the fourth feature data, the fourth weight data, and the first operation result, to obtain a fourth operation result;
take the fourth feature data as the first feature data and take the fourth operation result as the first operation result, to repeat the step of determining the current quantity of the shifts; and
in response to that the current quantity of the shifts reaches a preset quantity, take the fourth operation result as a target operation result of a current operation cycle corresponding to the first accelerator (61a), wherein the current operation cycle is a cycle including an operation before the shifting and an operation after the preset quantity of shifts.

13. A non-transient computer readable storage medium, **characterized in that** the storage medium stores a computer program, and the computer program is used for implementing the method according to any one of claims 1 to 7 when executed by an apparatus according to any of claims 8 to 12.

14. A system comprising the apparatus according to any of claims 8 to 12 and an electronic device (10), **characterized in that** the electronic device (10) comprises:
a processor (11); and a memory (12), configured to store processor-executable instructions,
wherein the processor (11) is configured to read the executable instructions from the memory (12), and execute the instructions to implement the method according to any one of claims 1 to 7.

## Patentansprüche

1. Verfahren zum Verarbeiten einer neuronalen Netzwerk-Merkmalskarte unter Verwendung einer Vielzahl von Beschleunigern, **dadurch gekennzeichnet, dass** das Verfahren umfasst:
Lesen (Schritt 201) von ersten Merkmalsdaten, die sich auf die neuronale Netzwerk-Merkmalskarte beziehen, aus einem ersten Schieberegister-Array bzw. einer ersten Schieberegisteranordnung in einem ersten Beschleuniger unter einer Vielzahl von neuronalen Netzwerk-Beschleunigern, und Lesen von ersten Gewichtungsdaten, die den ersten Merkmalsdaten entsprechen aus einem ersten Puffer in dem ersten Beschleuniger, wobei die Schieberegister-Arrays in verschiedenen neuronalen Netzwerk-Beschleunigern gemäß einer bestimmten Anordnungsregel verbunden sind;
Durchführen (Schritt 202) einer voreingestellten Operation an den ersten Merkmalsdaten und den ersten Gewichtsdaten unter Verwendung des ersten Beschleunigers, um ein erstes Operationsergebnis zu erhalten;
Verschieben (Schritt 203), gemäß einer voreingestellten Verschiebungsregel, erster überlappender Merkmalsdaten, die sich in den ersten Merkmalsdaten befinden und die von einem zweiten Beschleuniger in der Vielzahl von neuronalen Netzwerkbeschleunigern benötigt werden, von dem ersten Schieberegisterarray zu einem zweiten Schieberegisterarray bzw. einer zweiten Schieberegisteranordnung des zweiten Beschleunigers, wobei der zweite Beschleuniger ein benachbarter Beschleuniger des ersten Beschleunigers ist und die voreingestellte Verschiebungsregel basierend auf einer Verbindungsart zwischen den Schieberegisterarrays bestimmt wird;
Lesen (Schritt 204) von zweiten Merkmalsdaten, die die ersten überlappenden Merkmalsdaten umfassen, aus der zweiten Schieberegisteranordnung in dem zweiten Beschleuniger, und Lesen von zweiten Gewichtungsdaten, die den zweiten Merkmalsdaten entsprechen, aus einem zweiten Puffer in dem zweiten Beschleuniger; und
Durchführen (Schritt 205) einer voreingestellten Operation an den zweiten Merkmalsdaten und den zweiten Gewichtsdaten unter Verwendung des zweiten Beschleunigers, um ein zweites Operationsergebnis zu erhalten.

2. Verfahren nach Anspruch 1, wobei eine Schieberegisteranordnung in jedem neuronalen Netzwerk-Beschleuniger mit einer Ziel-Schieberegisteranordnung außerhalb der Mehrzahl von neuronalen Netzwerk-Beschleunigern gemäß einer voreingestellten Anordnungsregel verbunden ist; und
vor dem Lesen (Schritt 201) erster Merkmalsdaten, die sich auf die Merkmalskarte des neuronalen Netzes beziehen, aus einem ersten Schieberegister-Array in einem ersten Beschleuniger, und Lesen erster Gewichtungsdaten, die den ersten Merkmalsdaten entsprechen, aus einem ersten Puffer in dem ersten Beschleuniger, wobei das Verfahren ferner umfasst:
für jeden Beschleuniger in der Vielzahl von neuronalen Netzwerk-Beschleunigern, Lesen (Schritt 310), basierend auf einer Größe des Schieberegisterfeldes bzw. Schieberegister-Arrays in dem Beschleuniger, von Merkmalsdaten, die für einen aktuellen Betriebszyklus des Beschleunigers erforderlich sind, aus einem Speicher in dem Beschleuniger, und Schreiben der Merkmalsdaten in das Schieberegisterfeld in dem Beschleuniger, wobei der aktuelle Betriebszyklus ein Zyklus ist, der einen Betrieb vor dem Verschieben und einen Betrieb nach einer voreingestellten Menge von Verschiebungen umfasst, und die für den aktuellen Betriebszyklus erforderlichen Merkmalsdaten die ersten Merkmalsdaten, die gegenwärtig zu verarbeiten sind, und Merkmalsdaten, die nach dem Verschieben zu verarbeiten sind, umfassen; und
Lesen (Schritt 320) von dritten Merkmalsdaten, die für einen nächsten Betriebszyklus eines ersten vorkonfigurierten Beschleunigers erforderlich sind, aus einem Speicher des ersten vorkonfigurierten Beschleunigers in der Vielzahl von neuronalen Netzwerkbeschleunigern, und Schreiben der dritten Merkmalsdaten in das Zielschieberegisterfeld, wobei die dritten Merkmalsdaten überlappende Merkmalsdaten umfassen, die von einem zweiten vorkonfigurierten Beschleuniger in der Vielzahl von neuronalen Netzwerkbeschleunigern benötigt werden.

3. Verfahren nach Anspruch 2, wobei nach der Durchführung (Schritt 202) einer voreingestellten Operation an den ersten Merkmalsdaten und den ersten Gewichtsdaten unter Verwendung des ersten Beschleunigers, um ein erstes Operationsergebnis zu erhalten, das Verfahren ferner umfasst:
Verschieben (Schritt 330), gemäß der voreingestellten Verschiebungsregel, von zweiten überlappenden Merkmalsdaten, die sich in den dritten Merkmalsdaten in der Zielschieberegisteranordnung befinden und die von dem zweiten vorkonfigurierten Beschleuniger benötigt werden, in eine Schieberegisteranordnung in dem zweiten vorkonfigurierten Beschleuniger.

4. Verfahren nach Anspruch 1, wobei das Verfahren vor dem Lesen (Schritt 201) von ersten Merkmalsdaten, die sich auf die Merkmalskarte des neuronalen Netzes beziehen, aus einem ersten Schieberegisterfeld bzw. Schieberegister-Array in einem ersten Beschleuniger und dem Lesen von ersten Gewichtungsdaten, die den ersten Merkmalsdaten entsprechen, aus einem ersten Puffer in dem ersten Beschleuniger, weiterhin umfasst:
Aufteilen (Schritt 410) der Merkmalskarte des neuronalen Netzes in nicht überlappende Merkmalsdaten, die jeweils verschiedenen Beschleunigern des neuronalen Netzes entsprechen, gemäß einer voreingestellten Aufteilungsregel; und
Schreiben (Schritt 420) der sich nicht überschneidenden Merkmalsdaten, die jeweils verschiedenen neuronalen Netzbeschleunigern entsprechen, in einen Speicher jedes neuronalen Netzwerkbeschleunigers.

5. Verfahren nach Anspruch 1, wobei die voreingestellte Operation eine Multiplikations-Akkumulations-Operation ist; und
die Durchführung (Schritt 202) einer voreingestellten Operation an den ersten Merkmalsdaten und den ersten Gewichtsdaten unter Verwendung des ersten Beschleunigers, um ein erstes Operationsergebnis zu erhalten, umfasst:
Bestimmen (Schritt 2021) eines ersten Merkmalswertes in den ersten Merkmalsdaten, der der Multiplikations-Akkumulations-Operationseinheit entspricht, und eines ersten Gewichtungswertes in den ersten Gewichtsdaten, der der Multiplikations-Akkumulations-Operationseinheit entspricht, für jede Multiplikations-Akkumulations-Operationseinheit in dem ersten Beschleuniger;
Durchführen (Schritt 2022) einer Multiplikationsoperation an dem ersten Merkmalswert und dem ersten Gewichtungswert unter Verwendung der Multiplikations-Akkumulationsoperationseinheit, um ein erstes Produktergebnis zu erhalten;
Addieren (Schritt 2023) des ersten Produktergebnisses zu einem vorherigen Akkumulationsergebnis, das der Multiplikations-Akkumulations-Operationseinheit entspricht, um ein aktuelles Akkumulationsergebnis zu erhalten, das der Multiplikations-Akkumulations-Operationseinheit entspricht, wobei das vorherige Akkumulationsergebnis ein Multiplikations-Akkumulationsergebnis ist, das aus einer vorherigen Operation durch die Multiplikations-Akkumulations-Operationseinheit erhalten wurde; und
Übernahme (Schritt 2024) des aktuellen Akkumulationsergebnisses, das jeder Multiplikations-Akkumulations-Operationseinheit im ersten Beschleuniger entspricht, als das erste Operationsergebnis.

6. Verfahren nach Anspruch 1, wobei die voreingestellte Schaltvorschrift eine voreingestellte Anzahl von Schichten und Schaltweisen umfasst, die jeweils verschiedenen Schichten entsprechen;
das Verschieben (Schritt 203), gemäß einer voreingestellten Verschiebungsregel, erster überlappender Merkmalsdaten, die in den ersten Merkmalsdaten sind und die von einem zweiten Beschleuniger in der Vielzahl von neuronalen Netzwerkbeschleunigern benötigt werden, von dem ersten Schieberegisterfeld zu einem zweiten Schieberegisterfeld des zweiten Beschleunigers umfasst:
Bestimmung (Schritt 2031) einer aktuellen Anzahl von Schichten;
als Reaktion darauf, dass die Verschiebungsart, die der aktuellen Menge der Verschiebungen entspricht, eine erste Verschiebungsart ist, Verschieben (Schritt 2032a), basierend auf der ersten Verschiebungsart, der ersten überlappenden Merkmalsdaten in den ersten Merkmalsdaten, die von dem zweiten Beschleuniger benötigt werden, von dem ersten Schieberegisterarray zu dem zweiten Schieberegisterarray des zweiten Beschleunigers, wobei das erste Schieberegisterarray nach der Verschiebung dritte überlappende Merkmalsdaten von einem dritten Schieberegisterarray eines dritten Beschleunigers in der Vielzahl von neuronalen Netzwerkbeschleunigern umfasst; und
als Reaktion darauf, dass die der aktuellen Menge der Verschiebungen entsprechende Verschiebungsart eine zweite Verschiebungsart ist, Verschieben (Schritt 2032b) von Merkmalsdaten in der ersten Schieberegisteranordnung gemäß der zweiten Verschiebungsart; und
das Verfahren umfasst ferner:
Lesen (Schritt 510) von vierten Merkmalsdaten nach der Verschiebung aus der ersten Schieberegisteranordnung nach der Verschiebung, und Lesen von vierten Gewichtsdaten, die den vierten Merkmalsdaten entsprechen, aus dem ersten Puffer;
Durchführen (Schritt 520) einer voreingestellten Operation an den vierten Merkmalsdaten, den vierten Gewichtsdaten und dem ersten Operationsergebnis unter Verwendung des ersten Beschleunigers, um ein viertes Operationsergebnis zu erhalten;
Nehmen (Schritt 530) der vierten Merkmalsdaten als die ersten Merkmalsdaten und Nehmen des vierten Operationsergebnisses als das erste Operationsergebnis, um den Schritt des Bestimmens der aktuellen Menge der Verschiebungen zu wiederholen; und
als Reaktion darauf, dass die aktuelle Menge der Verschiebungen eine voreingestellte Menge erreicht, Entnahme (Schritt 540) des vierten Operationsergebnisses als ein Zieloperationsergebnis eines aktuellen Operationszyklus, der dem ersten Beschleuniger entspricht, wobei der aktuelle Operationszyklus ein Zyklus ist, der eine Operation vor der Verschiebung und eine Operation nach der voreingestellten Menge von Verschiebungen umfasst.

7. Verfahren nach Anspruch 6, wobei nach dem in Reaktion darauf, dass die aktuelle Menge der Verschiebungen eine voreingestellte Menge erreicht, das vierte Operationsergebnis als ein Zieloperationsergebnis eines aktuellen Operationszyklus entsprechend dem ersten Beschleuniger genommen wird (Schritt 540), das Verfahren ferner umfasst:
Lesen (Schritt 550) von fünften Merkmalsdaten, die einem nächsten Betriebszyklus des ersten Beschleunigers entsprechen, aus einem Speicher im ersten Beschleuniger;
Schreiben (Schritt 560) der fünften Merkmalsdaten in das erste Schieberegisterfeld des ersten Beschleunigers;
Wiederholen (Schritt 570) des Schritts des Lesens erster Merkmalsdaten, die sich auf die Merkmalskarte des neuronalen Netzes beziehen, aus einem ersten Schieberegister-Array in einem ersten Beschleuniger, und des Lesens erster Gewichtsdaten, die den ersten Merkmalsdaten entsprechen, aus einem ersten Puffer in dem ersten Beschleuniger;
als Reaktion darauf, dass der erste Beschleuniger die Verarbeitung in Betriebszyklen abschließt, die sich auf die neuronale Netzmerkmalskarte beziehen, Erhalten (Schritt 580) einer ersten Ausgangsuntermerkmalskarte, die der neuronalen Netzmerkmalskarte entspricht, basierend auf Zielbetriebsergebnissen, die jeweils durch den ersten Beschleuniger in verschiedenen Betriebszyklen erhalten werden; und
Erhalten (Schritt 590) einer Ausgangsmerkmalskarte, die der neuronalen Netzwerkmerkmalskarte entspricht, basierend auf ersten Ausgangsuntermerkmalskarten, die jeweils der Vielzahl von neuronalen Netzwerkbeschleunigern entsprechen.

8. Vorrichtung zum Verarbeiten einer neuronalen Netzwerk-Merkmalskarte unter Verwendung einer Vielzahl von Beschleunigern, **dadurch gekennzeichnet, dass** die Vorrichtung eine Vielzahl von neuronalen Netzwerk-Beschleunigern (61) umfasst, wobei jeder neuronale Netzwerk-Beschleuniger (61) einen Controller (611), ein Schieberegisterfeld (612), einen Puffer (613) und ein Operationsfeld (614) für eine voreingestellte Operation umfasst;
für einen ersten Beschleuniger (61a) in der Vielzahl von neuronalen Netzwerk-Beschleunigern eine erste Steuerung bzw. einen ersten Controller (611a) in dem ersten Beschleuniger (61a) erste Merkmalsdaten, die sich auf die neuronale Netzwerk-Merkmalskarte beziehen, aus einem ersten Schieberegister-Array (612a) in dem ersten Beschleuniger (61a) liest und erste Gewichtsdaten, die den ersten Merkmalsdaten entsprechen, aus einem ersten Puffer (613a) in dem ersten Beschleuniger (61a) liest, wobei die Schieberegister-Arrays in verschiedenen neuronalen Netzwerk-Beschleunigern gemäß einer bestimmten Anordnungsregel verbunden sind;
der erste Controller (611a) ein erstes Operationsarray (614a) in dem ersten Beschleuniger (61a) steuert, um eine voreingestellte Operation an den ersten Merkmalsdaten und den ersten Gewichtsdaten durchzuführen, um ein erstes Operationsergebnis zu erhalten;
die erste Steuerung (611a) gemäß einer voreingestellten Verschiebungsregel die erste Schieberegisteranordnung (612a) steuert, um erste überlappende Merkmalsdaten, die in den ersten Merkmalsdaten enthalten sind und die von einem zweiten Beschleuniger (61b) in der Vielzahl von Neuronennetzbeschleunigern benötigt werden, zu einer zweiten Schieberegisteranordnung (612b) des zweiten Beschleunigers (61b) zu verschieben, wobei der zweite Beschleuniger ein benachbarter Beschleuniger des ersten Beschleunigers ist und die voreingestellte Verschiebungsregel auf der Grundlage einer Verbindungsart zwischen den Schieberegisteranordnungen bestimmt wird;
ein zweiter Controller bzw. eine zweite Steuerung (611b) in dem zweiten Beschleuniger (61b) zweite Merkmalsdaten, die die ersten überlappenden Merkmalsdaten umfassen, aus dem zweiten Schieberegisterfeld (612b) liest und zweite Gewichtungsdaten, die den zweiten Merkmalsdaten entsprechen, aus einem zweiten Puffer (613b) in dem zweiten Beschleuniger (61b) liest; und
der zweite Controller (611b) ein zweites Operationsarray (614b) im zweiten Beschleuniger (61b) steuert, um eine voreingestellte Operation an den zweiten Merkmalsdaten und den zweiten Gewichtsdaten durchzuführen, um ein zweites Operationsergebnis zu erhalten.

9. Vorrichtung nach Anspruch 8, wobei jeder neuronale Netzwerk-Beschleuniger (61) ferner einen Speicher (615) umfasst; die Vorrichtung ferner eine Ziel-Schieberegisteranordnung (62) umfasst; und die Ziel-Schieberegisteranordnung (62) mit der Schieberegisteranordnung (612) in jedem neuronalen Netzwerk-Beschleuniger (61) gemäß einer voreingestellten Anordnungsregel verbunden ist;
für jeden Beschleuniger (61) in der Vielzahl von neuronalen Netzwerk-Beschleunigern liest der Controller (611) in dem Beschleuniger (61) basierend auf einer Größe des Schieberegister-Arrays (612) in dem Beschleuniger (61) Merkmalsdaten, die für einen aktuellen Betriebszyklus des Beschleunigers (61) erforderlich sind, aus dem Speicher (615) in dem Beschleuniger (61) und schreibt die Merkmalsdaten in die Schieberegisteranordnung (612) in dem Beschleuniger (61), wobei der aktuelle Betriebszyklus ein Zyklus ist, der einen Betrieb vor dem Verschieben und einen Betrieb nach einer voreingestellten Anzahl von Verschiebungen einschließt, und die für den aktuellen Betriebszyklus erforderlichen Merkmalsdaten die ersten Merkmalsdaten, die gegenwärtig zu verarbeiten sind, und Merkmalsdaten, die nach dem Verschieben zu verarbeiten sind, umfassen und
der Controller (611) eines ersten vorkonfigurierten Beschleunigers in der Vielzahl von neuronalen Netzwerkbeschleunigern (61) dritte Merkmalsdaten, die für einen nächsten Betriebszyklus des ersten vorkonfigurierten Beschleunigers erforderlich sind, aus dem Speicher (615) des ersten vorkonfigurierten Beschleunigers liest und die dritten Merkmalsdaten in das Zielschieberegisterfeld (62) schreibt, wobei die dritten Merkmalsdaten überlappende Merkmalsdaten umfassen, die von einem zweiten vorkonfigurierten Beschleuniger in der Vielzahl von neuronalen Netzwerkbeschleunigern benötigt werden.

10. Vorrichtung nach Anspruch 8, ferner umfassend:
ein Steuermodul (63), das jeweils mit den Beschleunigern des neuronalen Netzes (61) verbunden ist,
wobei das Steuermodul (63) so konfiguriert ist, dass es gemäß einer voreingestellten Teilungsregel die neuronale Netzwerk-Merkmalskarte in nicht überlappende Merkmalsdaten aufteilt, die jeweils verschiedenen neuronalen Netzwerkbeschleunigern (61) entsprechen; und die nicht überlappenden Merkmalsdaten, die jeweils verschiedenen neuronalen Netzwerkbeschleunigern (61) entsprechen, in den Speicher (615) jedes neuronalen Netzwerkbeschleunigers (61) schreibt.

11. Vorrichtung nach Anspruch 8, wobei die voreingestellte Operation eine Multiplikations-Akkumulations-Operation ist; das Operationsfeld (614) eine Vielzahl von Multiplikations-Akkumulations-Operationseinheiten (6141) umfasst; und jede Multiplikations-Akkumulations-Operationseinheit (6141) einen Multiplizierer (mul) und einen Addierer (add) umfasst; und
der erste Controller (611a) ist speziell konfiguriert, um:
für jede Multiplikations-Akkumulations-Operationseinheit (6141) in der ersten Operationsanordnung (614a) einen ersten Merkmalswert in den ersten Merkmalsdaten, der der Multiplikations-Akkumulations-Operationseinheit (6141) entspricht, und einen ersten Gewichtswert in den ersten Gewichtsdaten, der der Multiplikations-Akkumulations-Operationseinheit (6141) entspricht, zu bestimmen;
den Multiplizierer (mul) der Multiplikations-Akkumulations-Operationseinheit (6141) zu steuern, um eine Multiplikationsoperation an dem ersten Merkmalswert und dem ersten Gewichtswert durchzuführen, um ein erstes Produktergebnis zu erhalten;
Steuern des Addierers (add) der Multiplikations-Akkumulations-Operationseinheit (6141), um das erste Produktergebnis zu einem vorherigen Akkumulationsergebnis zu addieren, das der Multiplikations-Akkumulations-Operationseinheit entspricht, um ein aktuelles Akkumulationsergebnis zu erhalten, das der Multiplikations-Akkumulations-Operationseinheit entspricht, wobei das vorherige Akkumulationsergebnis ein Multiplikations-Akkumulationsergebnis ist, das aus einer vorherigen Operation durch die Multiplikations-Akkumulations-Operationseinheit erhalten wurde; und
das aktuelle Akkumulationsergebnis, das jeder Multiplikations-Akkumulations-Operationseinheit (6141) in dem ersten Beschleuniger (61a) entspricht, als das erste Operationsergebnis zu verwenden.

12. Vorrichtung nach Anspruch 8, wobei die voreingestellte Schaltregel eine voreingestellte Anzahl von Schaltungen und Schaltweisen umfasst, die jeweils verschiedenen Schichten entsprechen;
der erste Controller (611a) ist speziell konfiguriert, um:
eine aktuelle Menge an Schichten zu bestimmen;
als Reaktion darauf, dass die Verschiebungsart, die der aktuellen Menge der Verschiebungen entspricht, eine erste Verschiebungsart ist, Steuern der ersten Schieberegisteranordnung (612a) auf der Grundlage der ersten Verschiebungsart, um die ersten überlappenden Merkmalsdaten in den ersten Merkmalsdaten, die von dem zweiten Beschleuniger (61b) benötigt werden, zu der zweiten Schieberegisteranordnung (612b) des zweiten Beschleunigers (61b) zu verschieben, wobei die erste Schieberegisteranordnung (612a) nach dem Verschieben dritte überlappende Merkmalsdaten von einer dritten Schieberegisteranordnung eines dritten Beschleunigers in der Vielzahl von neuronalen Netzwerk-Beschleunigern umfasst; und
als Reaktion darauf, dass die Verschiebungsart, die der aktuellen Menge der Verschiebungen entspricht, eine zweite Verschiebungsart ist, die erste Schieberegisteranordnung (612a) steuern, um Merkmalsdaten davon gemäß der zweiten Verschiebungsart zu verschieben; und
das erste Steuergerät (611a) ist ferner so konfiguriert, dass es:
Lesen von vierten Merkmalsdaten nach der Verschiebung aus der ersten Schieberegisteranordnung (612a) nach der Verschiebung, und Lesen von vierten Gewichtsdaten, die den vierten Merkmalsdaten entsprechen, aus dem ersten Puffer (613a);
das erste Operationsfeld (614a) zu steuern, um eine voreingestellte Operation an den vierten Merkmalsdaten, den vierten Gewichtsdaten und dem ersten Operationsergebnis durchzuführen, um ein viertes Operationsergebnis zu erhalten;
die vierten Merkmalsdaten als die ersten Merkmalsdaten nehmen und das vierte Operationsergebnis als das erste Operationsergebnis nehmen, um den Schritt des Bestimmens der aktuellen Menge der Verschiebungen zu wiederholen; und
in Reaktion darauf, dass die aktuelle Menge der Verschiebungen eine voreingestellte Menge erreicht, das vierte Operationsergebnis als ein Zieloperationsergebnis eines aktuellen Operationszyklus entsprechend dem ersten Beschleuniger (61a) zu nehmen, wobei der aktuelle Operationszyklus ein Zyklus ist, der eine Operation vor der Verschiebung und eine Operation nach der voreingestellten Menge von Verschiebungen umfasst.

13. Nicht-flüchtiges computerlesbares Speichermedium, **dadurch gekennzeichnet, dass** das Speichermedium ein Computerprogramm speichert und das Computerprogramm zur Implementierung des Verfahrens nach einem der Ansprüche 1 bis 7 verwendet wird, wenn es von einer Vorrichtung nach einem der Ansprüche 8 bis 12 ausgeführt wird.

14. System mit der Vorrichtung nach einem der Ansprüche 8 bis 12 und einem elektronischen Gerät (10), **dadurch gekennzeichnet, dass** das elektronische Gerät (10) umfasst:
einen Prozessor (11); und einen Speicher (12), der so konfiguriert ist, dass er vom Prozessor ausführbare Befehle speichert,
wobei der Prozessor (11) so konfiguriert ist, dass er die ausführbaren Anweisungen aus dem Speicher (12) liest und die Anweisungen ausführt, um das Verfahren nach einem der Ansprüche 1 bis 7 zu implementieren.

## Revendications

1. Méthode de traitement d'une carte de caractéristiques de réseau neuronal à l'aide d'une pluralité d'accélérateurs, **caractérisée par le fait que** la méthode comprend :
lecture (étape 201) des premières données de caractéristiques liées à la carte de caractéristiques du réseau neuronal à partir d'un premier tableau de registres à décalage dans un premier accélérateur parmi une pluralité d'accélérateurs de réseaux neuronaux, et lecture des premières données de poids correspondant aux premières données de caractéristiques à partir d'un premier tampon dans le premier accélérateur, les tableaux de registres à décalage dans divers accélérateurs de réseaux neuronaux étant connectés conformément à une certaine règle d'agencement ;
effectuer (étape 202) une opération prédéfinie sur les premières données de caractéristiques et les premières données de poids en utilisant le premier accélérateur, afin d'obtenir un premier résultat d'opération ;
déplacer (étape 203), selon une règle de décalage prédéfinie, les premières données de caractéristiques qui se chevauchent dans les premières données de caractéristiques et qui sont requises par un deuxième accélérateur de la pluralité d'accélérateurs de réseaux neuronaux du premier tableau de registres de décalage vers un deuxième tableau de registres de décalage du deuxième accélérateur, dans lequel le deuxième accélérateur est un accélérateur adjacent au premier accélérateur, et la règle de décalage prédéfinie est déterminée sur la base d'un mode de connexion entre les tableaux de registres de décalage ;
lire (étape 204) les deuxièmes données de caractéristiques comprenant les premières données de caractéristiques qui se chevauchent dans le deuxième réseau de registres à décalage du deuxième accélérateur, et lire les deuxièmes données de poids correspondant aux deuxièmes données de caractéristiques dans un deuxième tampon du deuxième accélérateur ; et
effectuer (étape 205) une opération prédéfinie sur les deuxièmes données de caractéristiques et les deuxièmes données de poids en utilisant le deuxième accélérateur, afin d'obtenir un deuxième résultat d'opération.

2. Méthode selon la revendication 1, dans laquelle un réseau ou tableau de registres à décalage dans chaque accélérateur de réseau neuronal est connecté à un réseau de registres à décalage cible en dehors de la pluralité d'accélérateurs de réseau neuronal selon une règle d'agencement prédéfinie ; et
avant la lecture (étape 201) des premières données de caractéristiques liées à la carte de caractéristiques du réseau neuronal à partir d'un premier réseau de registres à décalage dans un premier accélérateur, et la lecture des premières données de poids correspondant aux premières données de caractéristiques à partir d'un premier tampon dans le premier accélérateur, le procédé comprend en outre :
pour chaque accélérateur de la pluralité d'accélérateurs de réseaux neuronaux, lire (étape 310), en fonction d'une taille du tableau de registres de décalage dans l'accélérateur, les données de caractéristiques requises pour un cycle d'opération courant de l'accélérateur à partir d'une mémoire dans l'accélérateur, et écrire les données de caractéristiques dans le tableau de registres de décalage dans l'accélérateur, dans lequel le cycle d'opération courant est un cycle comprenant une opération avant le décalage et une opération après une quantité prédéfinie de décalages, et les données de caractéristiques requises pour le cycle d'opération courant comprennent les premières données de caractéristiques à traiter actuellement et les données de caractéristiques à traiter après le décalage ; et
lire (étape 320) les données de troisième caractéristique requises pour un prochain cycle d'opération d'un premier accélérateur préconfiguré à partir d'une mémoire du premier accélérateur préconfiguré dans la pluralité d'accélérateurs de réseaux neuronaux, et écrire les données de troisième caractéristique dans le réseau de registres à décalage cible, les données de troisième caractéristique comprenant des données de caractéristique se chevauchant requises par un deuxième accélérateur préconfiguré dans la pluralité d'accélérateurs de réseaux neuronaux.

3. La méthode selon la revendication 2, dans laquelle après avoir effectué (étape 202) une opération prédéfinie sur les premières données de caractéristiques et les premières données de poids en utilisant le premier accélérateur, pour obtenir un premier résultat d'opération, la méthode comprend en outre :
déplacer (étape 330), conformément à la règle de décalage prédéfinie, les deuxièmes données de caractéristiques se chevauchant qui se trouvent dans les troisièmes données de caractéristiques du tableau de registres de décalage cible et qui sont requises par le deuxième accélérateur préconfiguré vers un tableau de registres de décalage dans le deuxième accélérateur préconfiguré.

4. Méthode selon la revendication 1, dans laquelle, avant la lecture (étape 201) des premières données de caractéristiques liées à la carte de caractéristiques du réseau neuronal à partir d'un premier réseau de registres à décalage dans un premier accélérateur, et la lecture des premières données de poids correspondant aux premières données de caractéristiques à partir d'un premier tampon dans le premier accélérateur, la méthode comprend en outre :
diviser (étape 410), selon une règle de division prédéfinie, la carte de caractéristiques du réseau neuronal en données de caractéristiques ne se chevauchant pas et correspondant respectivement à divers accélérateurs de réseau neuronal ; et
écrire (étape 420) les données de caractéristiques non superposées correspondant respectivement à divers accélérateurs de réseaux neuronaux dans une mémoire de chaque accélérateur de réseaux neuronaux.

5. Méthode selon la revendication 1, dans laquelle l'opération prédéfinie est une opération de multiplication-accumulation ; et
l'exécution (étape 202) d'une opération prédéfinie sur les premières données de caractéristiques et les premières données de poids en utilisant le premier accélérateur, pour obtenir un premier résultat d'opération comprend :
pour toute unité d'opération de multiplication-accumulation dans le premier accélérateur, déterminer (étape 2021) une première valeur de caractéristique dans les premières données de caractéristique qui correspond à l'unité d'opération de multiplication-accumulation, et une première valeur de poids dans les premières données de poids qui correspond à l'unité d'opération de multiplication-accumulation ;
effectuer (étape 2022) une opération de multiplication sur la première valeur de caractéristique et la première valeur de poids en utilisant l'unité d'opération de multiplication-accumulation, afin d'obtenir un premier résultat de produit ;
ajouter (étape 2023) le résultat du premier produit à un résultat d'accumulation précédent correspondant à l'unité d'opération de multiplication-accumulation, pour obtenir un résultat d'accumulation actuel correspondant à l'unité d'opération de multiplication-accumulation, dans lequel le résultat d'accumulation précédent est un résultat de multiplication-accumulation obtenu à partir d'une opération précédente de l'unité d'opération de multiplication-accumulation ; et
prendre (étape 2024) le résultat de l'accumulation en cours correspondant à chaque unité d'opération de multiplication-accumulation dans le premier accélérateur comme premier résultat d'opération.

6. Procédé selon la revendication 1, dans lequel la règle de changement de vitesse prédéfinie comprend une quantité prédéfinie de changements de vitesse et de modes de changement de vitesse correspondant respectivement aux différents changements de vitesse ;
le décalage (étape 203), selon une règle de décalage prédéfinie, des premières données de caractéristiques se chevauchant qui sont dans les premières données de caractéristiques et qui sont requises par un deuxième accélérateur dans la pluralité d'accélérateurs de réseaux neuronaux, du premier tableau de registres de décalage vers un deuxième tableau de registres de décalage du deuxième accélérateur comprend :
déterminer (étape 2031) une quantité actuelle de quarts ;
en réponse au fait que la méthode de décalage correspondant à la quantité actuelle des décalages est une première méthode de décalage, décaler (étape 2032a), sur la base de la première méthode de décalage, les premières données de caractéristiques se chevauchant dans les premières données de caractéristiques requises par le deuxième accélérateur, du premier tableau de registres de décalage au deuxième tableau de registres de décalage du deuxième accélérateur, dans lequel le premier tableau de registres de décalage après le décalage comprend des troisièmes données de caractéristiques se chevauchant provenant d'un troisième tableau de registres de décalage d'un troisième accélérateur dans la pluralité d'accélérateurs de réseaux neuronaux ; et
en réponse au fait que la méthode de décalage correspondant à la quantité actuelle des décalages est une deuxième méthode de décalage, décaler (étape 2032b) les données caractéristiques dans le premier réseau de registres de décalage selon la deuxième méthode de décalage ; et
la méthode comprend en outre
lecture (étape 510) des quatrièmes données de caractéristiques après le décalage à partir du premier réseau de registres à décalage après le décalage, et lecture des quatrièmes données de poids correspondant aux quatrièmes données de caractéristiques à partir de la première mémoire tampon ;
effectuer (étape 520) une opération prédéfinie sur la quatrième donnée de caractéristique, la quatrième donnée de poids et le premier résultat d'opération en utilisant le premier accélérateur, afin d'obtenir un quatrième résultat d'opération ;
prendre (étape 530) la quatrième donnée de caractéristique comme première donnée de caractéristique et prendre le quatrième résultat d'opération comme premier résultat d'opération, pour répéter l'étape de détermination de la quantité actuelle des équipes ; et
en réponse au fait que la quantité actuelle de décalages atteint une quantité prédéfinie, prendre (étape 540) le quatrième résultat d'opération comme résultat d'opération cible d'un cycle d'opération en cours correspondant au premier accélérateur, le cycle d'opération en cours étant un cycle comprenant une opération avant le décalage et une opération après la quantité prédéfinie de décalages.

7. Le procédé selon la revendication 6, dans lequel, après avoir pris (étape 540) le quatrième résultat d'opération comme résultat d'opération cible d'un cycle d'opération courant correspondant au premier accélérateur, en réponse au fait que la quantité actuelle des décalages atteint une quantité prédéfinie, le procédé comprend en outre :
lecture (étape 550) des cinquièmes données de caractéristiques correspondant à un prochain cycle de fonctionnement du premier accélérateur à partir d'une mémoire dans le premier accélérateur ;
écrire (étape 560) les cinquièmes données de caractéristiques dans le premier réseau de registres à décalage du premier accélérateur ;
répéter (étape 570) l'étape consistant à lire les premières données de caractéristiques liées à la carte de caractéristiques du réseau neuronal à partir d'un premier tableau de registres à décalage dans un premier accélérateur, et à lire les premières données de poids correspondant aux premières données de caractéristiques à partir d'une première mémoire tampon dans le premier accélérateur ;
si le premier accélérateur termine le traitement dans les cycles d'opération liés à la carte de caractéristiques du réseau neuronal, obtenir (étape 580) une première carte de sous-caractéristiques de sortie correspondant à la carte de caractéristiques du réseau neuronal sur la base des résultats d'opérations cibles respectivement obtenus par le premier accélérateur dans divers cycles d'opération ; et
obtenir (étape 590) une carte de caractéristiques de sortie correspondant à la carte de caractéristiques du réseau neuronal sur la base des premières cartes de sous-caractéristiques de sortie correspondant respectivement à la pluralité d'accélérateurs de réseau neuronal.

8. Appareil de traitement d'une carte de caractéristiques de réseau neuronal à l'aide de plusieurs accélérateurs, **caractérisé par le fait que** l'appareil comprend plusieurs accélérateurs de réseau neuronal (61), chaque accélérateur de réseau neuronal (61) comprenant un contrôleur (611), un réseau de registres à décalage (612), une mémoire tampon (613) et un réseau d'opérations (614) pour une opération prédéfinie ;
pour un premier accélérateur (61a) dans la pluralité d'accélérateurs de réseaux neuronaux, un premier contrôleur (611a) dans le premier accélérateur (61a) lit les premières données de caractéristiques liées à la carte de caractéristiques du réseau neuronal à partir d'une première matrice de registres à décalage (612a) dans le premier accélérateur (61a), et lit les premières données de poids correspondant aux premières données de caractéristiques à partir d'un premier tampon (613a) dans le premier accélérateur (61a), dans lequel les matrices de registres à décalage dans divers accélérateurs de réseaux neuronaux sont connectées selon une certaine règle d'agencement ;
le premier contrôleur (611a) commande une première matrice d'opérations (614a) dans le premier accélérateur (61a) pour effectuer une opération prédéfinie sur les premières données de caractéristiques et les premières données de poids, afin d'obtenir un premier résultat d'opération ;
le premier contrôleur (611a) commande, selon une règle de décalage prédéfinie, le premier réseau de registres de décalage (612a) pour décaler les premières données de caractéristiques qui se chevauchent dans les premières données de caractéristiques et qui sont requises par un deuxième accélérateur (61b) dans la pluralité d'accélérateurs de réseaux neuronaux vers un deuxième réseau de registres de décalage (612b) du deuxième accélérateur (61b), dans lequel le deuxième accélérateur est un accélérateur adjacent au premier accélérateur, et la règle de décalage prédéfinie est déterminée sur la base d'un mode de connexion entre les réseaux de registres de décalage ;
un deuxième contrôleur (611b) dans le deuxième accélérateur (61b) lit les deuxièmes données de caractéristiques comprenant les premières données de caractéristiques se chevauchant dans le deuxième réseau de registres à décalage (612b), et lit les deuxièmes données de poids correspondant aux deuxièmes données de caractéristiques dans un deuxième tampon (613b) dans le deuxième accélérateur (61b) ; et
le deuxième contrôleur (611b) commande un deuxième réseau d'opérations (614b) dans le deuxième accélérateur (61b) pour effectuer une opération prédéfinie sur les deuxièmes données de caractéristiques et les deuxièmes données de poids, afin d'obtenir un deuxième résultat d'opération.

9. Appareil selon la revendication 8, dans lequel chaque accélérateur de réseau neuronal (61) comprend en outre une mémoire (615) ; l'appareil comprend en outre un réseau de registres à décalage cible (62) ; et le réseau de registres à décalage cible (62) est connecté au réseau de registres à décalage (612) dans chaque accélérateur de réseau neuronal (61) selon une règle d'agencement prédéfinie ;
pour chaque accélérateur (61) de la pluralité d'accélérateurs de réseaux neuronaux, le contrôleur (611) de l'accélérateur (61) lit, en fonction de la taille du tableau de registres à décalage (612) de l'accélérateur (61), les données de caractéristiques requises pour un cycle d'opération courant de l'accélérateur (61) à partir de la mémoire (615) de l'accélérateur (61), et écrit les données de caractéristiques dans le tableau de registres à décalage (612) de l'accélérateur (61), et écrit les données de caractéristiques dans le réseau de registres à décalage (612) dans l'accélérateur (61), dans lequel le cycle d'opération en cours est un cycle comprenant une opération avant le décalage et une opération après une quantité prédéfinie de décalages, et les données de caractéristiques requises pour le cycle d'opération en cours comprennent les premières données de caractéristiques à traiter actuellement et les données de caractéristiques à traiter après le décalage ; et
le contrôleur (611) d'un premier accélérateur préconfiguré de la pluralité d'accélérateurs de réseaux neuronaux (61) lit dans la mémoire (615) du premier accélérateur préconfiguré les troisièmes données de caractéristiques requises pour le prochain cycle d'exploitation du premier accélérateur préconfiguré, et écrit les troisièmes données de caractéristiques dans le réseau de registres à décalage cible (62), les troisièmes données de caractéristiques comprenant des données de caractéristiques se chevauchant requises par un deuxième accélérateur préconfiguré de la pluralité d'accélérateurs de réseaux neuronaux.

10. L'appareil selon la revendication 8, comprenant en outre :
un module de commande (63), connecté aux accélérateurs de réseaux neuronaux (61), respectivement,
le module de commande (63) est configuré pour diviser, selon une règle de division prédéfinie, la carte de caractéristiques du réseau neuronal en données de caractéristiques ne se chevauchant pas correspondant respectivement à divers accélérateurs de réseau neuronal (61) ; et écrire les données de caractéristiques ne se chevauchant pas correspondant respectivement à divers accélérateurs de réseau neuronal (61) dans la mémoire (615) de chaque accélérateur de réseau neuronal (61).

11. Appareil selon la revendication 8, dans lequel l'opération prédéfinie est une opération de multiplication-accumulation ; le réseau d'opérations (614) comprend une pluralité d'unités d'opérations de multiplication-accumulation (6141) ; et chaque unité d'opérations de multiplication-accumulation (6141) comprend un multiplicateur (mul) et un additionneur (add) ; et
le premier contrôleur (611a) est spécifiquement configuré pour :
pour toute unité d'opération de multiplication-accumulation (6141) dans le premier tableau d'opérations (614a), déterminer une première valeur de caractéristique dans les premières données de caractéristique qui correspond à l'unité d'opération de multiplication-accumulation (6141), et une première valeur de poids dans les premières données de poids qui correspond à l'unité d'opération de multiplication-accumulation (6141) ;
commander le multiplicateur (mul) de l'unité d'opération de multiplication-accumulation (6141) pour effectuer une opération de multiplication sur la première valeur de caractéristique et la première valeur de poids, afin d'obtenir un premier résultat de produit ;
commander l'additionneur (add) de l'unité d'opération de multiplication-accumulation (6141) pour ajouter le premier résultat du produit à un résultat d'accumulation précédent correspondant à l'unité d'opération de multiplication-accumulation, afin d'obtenir un résultat d'accumulation actuel correspondant à l'unité d'opération de multiplication-accumulation, le résultat d'accumulation précédent étant un résultat de multiplication-accumulation obtenu lors d'une opération précédente de l'unité d'opération de multiplication-accumulation ; et
prendre le résultat de l'accumulation en cours correspondant à chaque unité d'opération de multiplication-accumulation (6141) dans le premier accélérateur (61a) comme premier résultat d'opération.

12. L'appareil selon la revendication 8, dans lequel la règle de changement de vitesse prédéfinie comprend une quantité prédéfinie de changements de vitesse et de modes de changement de vitesse correspondant respectivement aux différents changements de vitesse ;
le premier contrôleur (611a) est spécifiquement configuré pour :
déterminer une quantité actuelle d'équipes ;
en réponse au fait que la méthode de décalage correspondant à la quantité actuelle de décalages est une première méthode de décalage, commander, sur la base de la première méthode de décalage, le premier réseau de registres de décalage (612a) pour décaler les premières données de caractéristiques se chevauchant dans les premières données de caractéristiques qui sont requises par le deuxième accélérateur (61b) vers le deuxième réseau de registres de décalage (612b) du deuxième accélérateur (61b), dans lequel le premier réseau de registres à décalage (612a) comprend, après le décalage, des données de troisième caractéristique se chevauchant provenant d'un troisième réseau de registres à décalage d'un troisième accélérateur de la pluralité d'accélérateurs de réseaux neuronaux ; et
en réponse au fait que la méthode de décalage correspondant à la quantité actuelle de décalages est une deuxième méthode de décalage, commander le premier réseau de registres de décalage (612a) pour décaler les données caractéristiques de celui-ci selon la deuxième méthode de décalage ; et
le premier contrôleur (611a) est en outre configuré pour :
lire les quatrièmes données de caractéristiques après le décalage à partir du premier réseau de registres à décalage (612a) après le décalage, et lire les quatrièmes données de poids correspondant aux quatrièmes données de caractéristiques à partir de la première mémoire tampon (613a) ;
commander la première matrice d'opérations (614a) pour effectuer une opération prédéfinie sur la quatrième donnée de caractéristique, la quatrième donnée de poids et le premier résultat d'opération, afin d'obtenir un quatrième résultat d'opération ;
prendre la quatrième donnée caractéristique comme première donnée caractéristique et prendre le quatrième résultat d'opération comme premier résultat d'opération, afin de répéter l'étape de détermination de la quantité actuelle des équipes ; et
en réponse au fait que la quantité actuelle de décalages atteint une quantité prédéfinie, prendre le quatrième résultat d'opération comme résultat d'opération cible d'un cycle d'opération en cours correspondant au premier accélérateur (61a), le cycle d'opération en cours étant un cycle comprenant une opération avant le décalage et une opération après la quantité prédéfinie de décalages.

13. Support de stockage non transitoire lisible par ordinateur, **caractérisé en ce que** le support de stockage stocke un programme d'ordinateur, et le programme d'ordinateur est utilisé pour mettre en œuvre la méthode selon l'une des revendications 1 à 7 lorsqu'il est exécuté par un appareil selon l'une des revendications 8 à 12.

14. Système comprenant l'appareil selon l'une des revendications 8 à 12 et un dispositif électronique (10), **caractérisé en ce que** le dispositif électronique (10) comprend :
un processeur (11) ; et une mémoire (12), configurée pour stocker des instructions exécutables par le processeur,
dans lequel le processeur (11) est configuré pour lire les instructions exécutables de la mémoire (12) et exécuter les instructions pour mettre en œuvre la méthode selon l'une des revendications 1 à 7.
